# EUROPEAN PATENT SPECIFICATION

(11) **EP 0 675 037 B1**
(45) Date of publication and mention of the grant of the patent: **28.06.2000**
(21) Application number: 95103955.1
(22) Date of filing: 17.03.1995
(51) Int. Cl.: B62M 23/02

(54) **Electric bicycle**
Elektrofahrrad
Bicyclette électrique

(30) Priority: 29.03.1994 JP 5919094; 15.07.1994 JP 16421794; 18.07.1994 JP 16547894; 26.09.1994 JP 23002494
(43) Date of publication of application: 04.10.1995
(73) Proprietor: SANYO ELECTRIC CO. LTD, Moriguchi-shi, Osaka-fu (JP)
(72) Inventor: Fujiwara, Masakatsu, Kasai-shi, Hyogo-ken (JP); Hirose, Yasuo, Himeji-shi, Hyogo-ken (JP); Inui, Katumi, Himeji-shi, Hyogo-ken (JP); Yamaguchi, Yukifumi, Kasai-shi, Hyogo-ken (JP); Tanaka, Tatsuaki, Kasai-shi, Hyogo-ken (JP); Suhara, Toshihiro, Taka-gun, Hyogo-ken (JP); Matsumoto, Toshihiro, Nishiwaki-shi, Hyogo-ken (JP)
(74) Representative: Pfeifer, Hans-Peter, Dr., Dr. H.-P. Pfeifer Dr. P. Jany, Patentanwälte

(56) References cited:
- EP-A- 0 561 268
- US-A- 4 541 500
- US-A- 5 036 713
- US-A- 5 186 059
- PATENT ABSTRACTS OF JAPAN, unexamined applications, M field, vol. 14, no. 113, March 2, 1990 THE PATENT OFFICE JAPANESE GOVERNMENT page 122 M 944; & JP-A-01 314 685 (FUTAGAMI)
- PATENT ABSTRACTS OF JAPAN, unmexamined applications, M field, vol. 17, no. 151, March 25, 1993 THE PATENT OFFICE JAPANESE GOVERNMENT page 100 M 1387; & JP-A-04 321 482 (YAMAHA)
- PATENT ABSTRACTS OF JAPAN, unexamined applications, M field, vol. 17, no. 229, May 11, 1993 THE PATENT OFFICE JAPANESE GOVERNMENT page 74 M 1406; & JP-A-04 358 987 (YAMAHA)

## Description

The present invention relates to an electric bicycle which is provided with both a man power driving part driven by man power and an electric driving part driven by a motor, and drives the motor depending on magnitude of driving force of man power to support the driving force of man power by the driving force of the motor.

Conventionally, as for such an electric bicycle, it has been known an electric bicycle wherein a driving system by man power and a driving system by an electric motor are provided in parallel and are adapted to detect driving force of the driving system by man power to control output of the motor as shown in Japanese Unexamined Patent Publication No. 358987/1992 (B62M23/02).

In this electric bicycle, a cylindrical shaft is covered outside a crankshaft of a pedal to detect driving force of a driving system by man power, that is, rotary torque of a pedal, and pedaling force is adapted to be transmitted from the cylindrical shaft to a planetary gear mechanism through an one-way clutch and further transmitted to a rear wheel by a driving shaft interlocking with the planetary gear. An end of a torque detection lever is disposed in the planetary gear and another end is touched to a second lever connected to a potentiometer. The second detection lever is adapted to be returned by a return spring, the second lever rotates only in an angle depending on pedaling force of the pedal through the torque detection lever, and consequently torque given to the crankshaft is detected by measuring the amount of rotation with the potentiometer.

The cylindrical shaft is adapted to be transmitted with rotary driving force from the electric motor through the one-way clutch and the planetary gear and to increase the driving force of the motor depending on the detected torque to decrease a load of man power.

However, in such constitution, since the driving part is far from the rear wheel, driving force losses largely before reaching to the rear wheel. Further since rotation of the pedal and the motor in the longitudinal direction must be converted to rotation of the driving shaft in the lateral direction to transmit driving force and further converted to rotation in the longitudinal direction to rotate the rear wheel. Thus, there arise problems that constitution becomes complicated, larger in size, and are likely to develop troubles.

On the other hand, since torque given to the crankshaft is detected, there is a problem that rotary driving force of the motor is controlled to drive lower than necessity and therefore support force to man power becomes small when driving force losses largely before transmitting to the rear wheel as described above. In addition, since torque is adapted to be detected by the potentiometer through the torque detection lever and the second lever, it is feared that detection error occurs by vibration.

Apart from the aforesaid embodiment, there is disclosed in, for example, Japanese Unexamined Patent Publication No. 321482/1992 (B62M23/12), constitution wherein in order to detect driving force of the aforesaid driving system by man power, that is, rotary torque of the pedal, a load detection means to detect driving force is disposed in the middle of a driving shaft for transmitting driving force which is disposed between the pedal and the rear wheel.

However, when the load detection means is attached to the driving shaft, since wiring or so becomes necessary to transmit signals detected to detect a load to a control circuit, there arises a problem that constitution becomes very complicated and larger.

An other electric bicycle with a motor in a disk-shaped casing is disclosed in EP 0 561 268 A1.

The present invention has been made in view of the foregoing problems. It is, therefore, an object of the present invention to provide an electric bicycle to support driving force of man power wherein torque generated by man power is detected precisely with simple constitution and a motor is driven exactly depending on the torque.

It is also an object of the present invention to provide an electric bicycle to support driving force of man power wherein torque generated in an axletree is converted to movement in the direction of the axletree, torque generated by man power is detected precisely with simple constitution by detecting amount of the movement and a motor is driven exactly depending on the torque.

The problem is solved by an electric bicycle according to the independent claims.

In a first embodiment the invention preferably includes the control part which is disposed within the disk casing.

The torque detection part preferably detects strain of the rotary axle generated by driving force of the man power driving part.

The torque detection part is preferably fixed concentrically with the axletree of the wheel to the rotary side casing and is disposed to the rotary axle operated by driving force from the man power driving part.

The rotary axle is preferably disposed with a freewheel between the man power driving part and the rotary axle and with a bearing between the axle of the wheel and the rotary axle.

The torque detection part is preferably attached to the rotary side casing and detects signals to be transmitted to the control part fixed to the fixed side casing through a rotary transformer.

According to a second embodiment preferably further is included:
an elastic body expanding and contracting by pedaling force of the pedals and transmitting the pedaling force to the disk casing; and
a conversion member converting expansion and contraction of the elastic body in the direction of the axletree of the wheel;
   wherein the torque detection part detects amount of movement of the conversion member.

The conversion member preferably comprises:
a rotary board rotating by expansion and contraction of the elastic body;
an inclined part with an inclined end which is disposed convexly to the rotary board;
a slide member disposed slidably in the direction of the axletree;
a projection part formed on the slide member to touch to the inclined part; and
an elastic body urging the slide member in the direction of the rotary board.

The conversion member might comprise:
a screw gear formed around the axletree of the wheel;
a rotary board rotating by expansion and contraction of the elastic body and is allowed to slide in the direction of the axletree; and
a screw part formed in the rotary board and screwed with the screw gear.

The torque detection part might comprise a magnetic member or a conductive member and a coil disposed near the magnetic member or the conductive member, wherein one of them is designed to move in the direction of the axletree by the conversion member.

The torque detection part might comprise a pair of electrodes disposed to opposite to each other at a predetermined distance and a dielectric disposed to be allowed to insert into a gap between the electrodes, wherein one of them is designed to be move in the direction of the axletree by the conversion member.

The torque detection part might comprise a magnetic body and a magnetic detector disposed to opposite to the magnetic body, wherein one of them is designed to move in the direction of the axletree by the conversion member.

The torque detection part might comprise a reflection board reflecting light, a luminous part emitting light and an optical part installed with a light reception part detecting a light reception position by receiving reflection light from the reflection board, wherein the reflection board or the optical part is designed to move in the direction of the axletree by the conversion member.

According to a third embodiment preferably further is included an elastic body expanding and contracting by pedaling force of the pedals and transmitting the pedaling force to the disk casing; wherein the torque detection part detects amount of expansion and contraction of the elastic body.

It is preferable that a push member rotating by pedaling force of the man power driving part is disposed between the elastic body and the man power driving part; and a potentiometer changing values depending on displacement of the push member.

Thereby preferably is included:
a rotary board forming a gear part in a portion thereof continuously to the push member and rotating around a center of the axletree of the wheel; and
a small gear acting interlocking with an action of the gear part of the rotary board.

It is preferably included the torque detection part which is provided with an operation body disposed in the middle of expansion and contraction of the elastic body, and is also provided with a variable resistor interlocking with an action of the operation body.

According to the constitution of the present invention, torque generated by man power is detected by pedaling of a user, the motor is driven depending on magnitude of the torque, a rotary side casing rotates by pedaling force and force of the motor to rotate the wheel, whereby the electric bicycle travels by driving force of pedaling joined with driving force of the motor.

According to the invention, the control part is preferably disposed in the disk casing and signals of torque from the torque detection part in the disk casing is transmitted to the control part in the disk casing.

According to the invention, the torque detection part is preferably disposed to the rotary axle of the wheel, and when torque is generated by pedaling, the torque is detected by strain of the rotary shaft generated by reaction force of the torque. The torque detection part is disposed at a connection part between the rotary side casing and the fixed side casing, and then the maximum strain occurs at the rotary shaft of this connection part on the occasion of pedaling.

According to the invention, since the rotary axle is preferably disposed with a freewheel between the man power driving part and the rotary part and with a bearing between the front wheel and the rotary axle, the torque is preferably detected only when the man power driving part rotates normally, and driving force from the electric driving part can be transmitted only on the occasion of advancing.

According to the invention, signals detected by the torque detection part is preferably transmitted from the rotary side casing to the fixed side casing by a rotary transformer.

According to an embodiment of the invention, when an user pedals, pedaling force is transmitted from the pedals to the disk casing through the elastic body, and further to the wheel. At the starting time, the elastic body contracts largely when the user steps on the pedals, and the elastic body gets to hardly contract when the bicycle begins to move at a constant speed. On the occasion of accelerating, the elastic body contracts by stepping on the pedals and pushes the disk casing to rotate the wheel whereby the electric bicycle travels. In this way, the elastic body expands and contracts depending on magnitude of man power torque, the expansion and contraction are converted in the direction of the axletree by the conversion member, and the torque detection part detects this displacement to detect the man power torque. Since the motor is driven at the intensity depending on the man power torque, when the man power torque grows larger, support by the motor increases and then the electric bicycle travels with the use of driving force of man power in combination with that of the motor.

According to the invention, when the man power torque increases, preferably the elastic body contracts and the rotary board rotates, so that the inclined part disposed convexly to the rotary board rotates. Then the touching position of the projection part touching thereto moves, and the elastic member urging in the direction of the axletree contracts, or expands to move the slide member in the direction of the axletree. When the man power torque decreases, since the elastic body which has contracted by the increase of the man power torque expands, the rotary board rotates reversely, the slide member returns to the original position by force concerning to the rotation or expansion force of an elastic member urging in the direction of the axletree. Accordingly, the man power torque is detected as an amount of the movement of the slide member in the direction of the axletree.

According to the invention, when the man power torque increases, the elastic body preferably contracts and the rotary board rotates, so that the screw part formed in the rotary board screws in the direction of the axletree along the screw gear formed around the axletree, and the rotary board moves in the direction of the axletree. When the man power torque decreases, the contracted elastic body expands according to the decrease of the man power torue, the screw part moves reversely along the screw gear, whereby the rotary board returns to the original position in the direction of the axletree. In this way, like the aforesaid embodiment, the man power torque is detected as a displacement of the slide member in the direction of the axletree.

According to the invention, since one of the magnetic member or the conductive member and the coil is adapted to move in the direction of the axletree by the slide member, when relative position between the magnetic member and the coil approaches or when insertion volume of the magnetic member into the coil increases, inductance of the coil preferably increases. In the reverse case, the inductance of the coil decreases. The variation of voltage at this time is detected as the variation of pedaling force, and the motor is driven depending on the variation to rotate the wheel. When the conductive member moves in the vicinity of the coil, reverse operation occurs in the case of the magnetic member. That is, when the conductive member approaches to the coil, inductance of the coil decreases, and when the conductive member recedes from the coil, inductance of the coil increases.

According to the invention, as for torque detection part, since one of a pair of electrodes disposed in opposing relation with each other at a predetermined distance and the dielectric disposed to be allowed to insert into a gap between the electrodes is designed to move in the direction of the axletree by the conversion member, the conversion member preferably moves in the direction of the axletree depending on the torque and the dielectric goes into and out of the gap of the electrodes to change electrostatic capacity of the electrodes. Accordingly, the torque is detected by detecting variation of the electrostatic capacity depending on the torque.

Further, according to the invention, as for torque detection part, since one of the magnetic body and the magnetic detector disposed in opposing relation with the magnetic body is designed to be movable in the direction of axletree by the slide member, a distance between the magnetic body and the magnetic detector preferably varies depending on the torque. Accordingly, since magnetic flux density to be detected varies depending on the torque in the magnetic detector, amount of the variation is detected to detect the torque.

According to the invention, preferably outgoing light from the luminous part of the optical part is reflected by the reflection board and the reflected light is received by the light reception part. Since either the luminous part and the light reception part or the reflection board disposed in opposing relation therewith is designed to move in the direction of the axletree by the slide member, an position of light reception in the light reception part varies depending on amount of the movement. The light reception part detects the amount of the variation to detect the torque.

According to the invention, preferably pedaling force is transmitted from the pedals to the disk casing through the elastic body, and further to the wheel by pedaling of a user. At the starting time, when the user steps on the pedals, the elastic body contracts largely, and when the electric bicycle begins moving at a constant speed, the elastic body gets to hardly contract. On the occasion of accelerating, like at the starting time, the elastic body contracts by stepping on the pedals, the elastic body pushes the disk casing to rotate the wheel and then the electric bicycle travels. In this way, the elastic body disposed between the man power driving part and the wheel expands and contracts depending on magnitude of the man power torque and the torque detection part detects amount of the expansion and contraction to detect magnitude of the expansion and contraction, that is, the man power torque. When the man power torque is detected, the control part drives the motor at the magnitude depending on the torque. When the man power torque gets large, support of the motor gets large and the electric bicycle travels with the use of driving force of the man power in combination with driving force of the motor.

According to the invention preferably, the push member pushes the elastic body depending on movement of the man power driving part to rotate the wheel. At this time, the expansion and contraction of the elastic body are detected by an amount of displacement of the push member and the amount of displacement is detected, in turn, by the potentiometer.

According to the invention, in order to detect amount of displacement of the push member, the gear part formed continuously to the push member is preferably interlocked with the small gear disposed to the potentiometer to read the amount of the displacement of the push member.

In addition, the operation body disposed to the elastic body preferably moves with expansion and contraction of the elastic body and amount of the displacement is read by the variable resistor to drive the motor depending on value of the variable resistance.
Fig. 1 is a total perspective view of an electric bicycle according to one embodiment of the invention;
Fig. 2 is a constitutional view showing an arrangement of parts of a disk casing according to one embodiment of the invention;
Fig. 3 is a sectional view taken along the line A-A of Fig. 2;
Fig. 4 is a sectional side view of a disk casing of an electric bicycle according to another embodiment of the invention;
Fig. 5 is a perspective view showing the principal portion of a disk casing of an electric bicycle according to another embodiment of the invention;
Fig. 6 is a sectional side view of a disk casing of an electric bicycle according to still another embodiment of the invention;
Fig. 7 illustrates the image of actions of an electric bicycle according to the invention.
Fig. 8 is a front view showing constitution of a disk casing according to another embodiment of the invention;
Fig. 9 is a sectional side view showing a constitution of the last pulley;
Fig. 10 is a front view showing constitution of the last pulley;
Fig. 11 is another sectional side view showing constitution of the last pulley;
Fig. 12 is a circuit diagram of a torque detection part according to the invention;
Fig. 13 is a wave form chart at each point in the circuit shown in Fig. 12;
Fig. 14 is a sectional side view showing constitution of another last pulley of an electric bicycle according to the invention;
Fig. 15 is a sectional side view showing constitution of another torque detection part according to the invention;
Fig. 16 is a sectional side view showing constitution of still another torque detection part according to the invention;
Fig. 17 is a circuit diagram of a torque detection part shown in Fig. 15;
Fig. 18 is a sectional side view showing constitution of yet another torque detection part;
Fig. 19 is a sectional side view showing constitution of further torque detection part according to the invention;
Fig. 20 is a partially enlarged view of an optical part and a reflection board shown in Fig. 19;
Fig. 21 is a constitutional view showing an arrangement of parts of a disk casing according to another embodiment of the invention;
Fig. 22 is a plan view showing constitution of the last pulley of an electric bicycle according to one embodiment of the invention;
Fig. 23 is a sectional side view of a disk casing according to one embodiment of the invention;
Fig. 24 is a sectional side view of a board casing according to one embodiment of the invention;
Fig. 25 is a plan view showing a constitution of the last pulley of an electric bicycle according to another embodiment of the invention; and
Fig. 26 is a partially sectional side view of a board casing according to another embodiment of the invention.

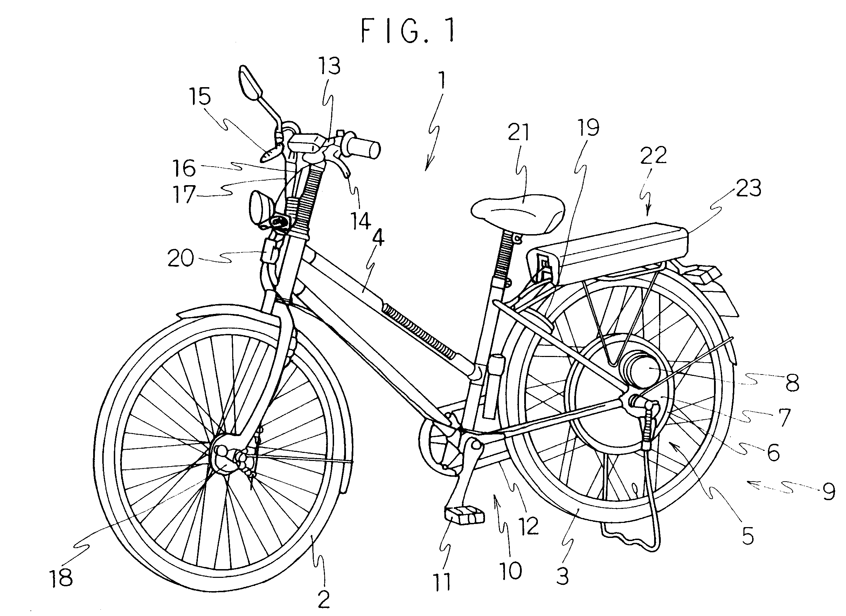

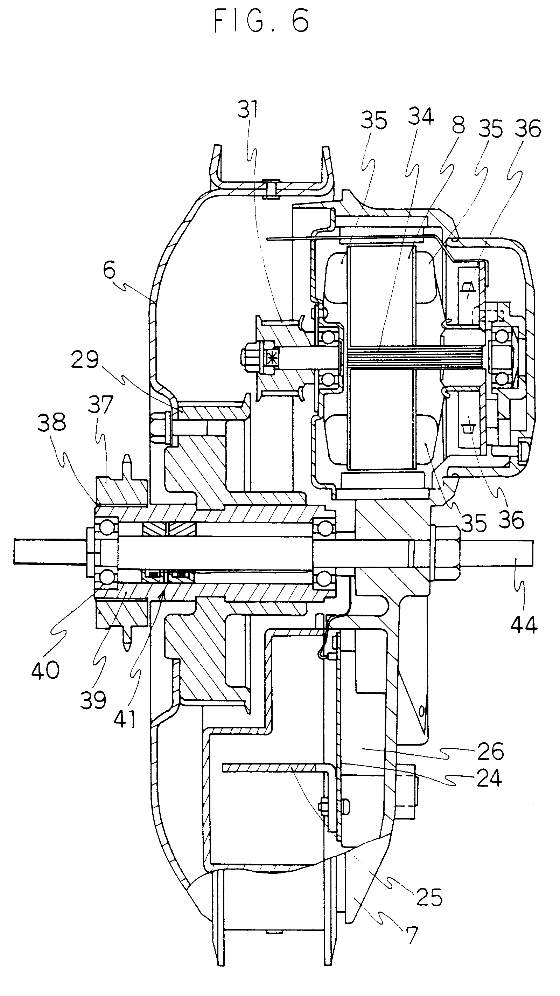

An electric bicycle according to the invention will now be described in detail with reference to Figs. 1 to 7.

Fig. 1 is a total perspective view of an electric bicycle according to the invention, wherein numeral 1 in the figure is a main body of the electric bicycle. The main body of the electric bicycle 1 is provided with a motor 8 described later and is adapted to vary driving force of a motor according to magnitude of torque generated by human power and to run while human power is supported by power of a motor 8.

A frame 4 of the main body of the electric bicycle is attached with a front wheel 2, a rear wheel 3, a handlebar 13 and a saddle 21, and the front wheel 2 is adapted to be steered with the handlebar 13. A disk casing 5 is disposed at a part of a rotary axle of the rear wheel 3. The disk casing 5 is provided with a rotary side casing 6 and a fixed side casing 7 fixed to the main body of the electric bicycle 1, and the rotary side casing 6 is designed to rotate in one with the rear wheel 3. The motor 8 is also disposed within the disk casing 5 and drives to rotate the rotary side casing 6 with a man power driving part 10 described later when electric driving is required. A driving part provided with the disk casing 5 is an electric driving part 9.

The man power driving part 10 is provided with pedals 11 and a chain 12, and an user depresses the pedals 11 to rotate the rear wheel 3 through the chain 12. Although the chain 12 is used as a transmission member of man power in this embodiment, a transmission member of man power in the present invention is not limited thereto and a belt, a rotary axle and so on might be used in place of the drive chain 12.

Break levers 14, 15 are attached to both right and left ends of the handlebar 13 to steer the front wheel, and brake devices 18, 19 are disposed to the front wheel 2 and the rear wheel 3, respectively. The brake levers 14, 15 and the brake devices are connected with wires 16, 17. The wires 16, 17 are pulled by working the brake levers 14, 15 and are adapted to operate respectively the front and rear brake devices 18, 19. A brake switch 20 is provided on the way of the wires 16, 17 and is designed to cut off an electric current to the motor 8 when the brake levers 14, 15 are worked.

A battery part 22 which is an electric source of the motor 8 is attached to the frame 4 over the rear wheel 3. The battery part 22 comprises a battery case 23 capable of sliding to attach to and detach from the frame 4 and a single type charging battery accommodated in the battery case 23. A voltage of an electric source thereof is approximately 24 volt.

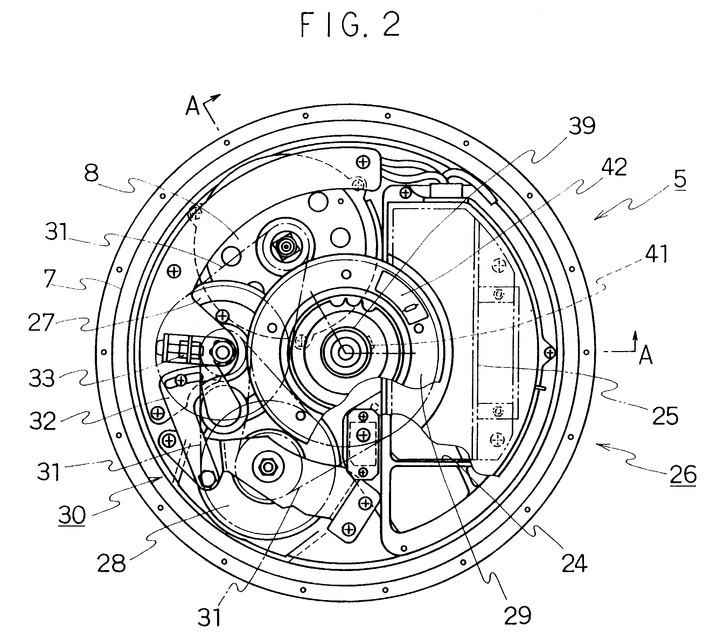

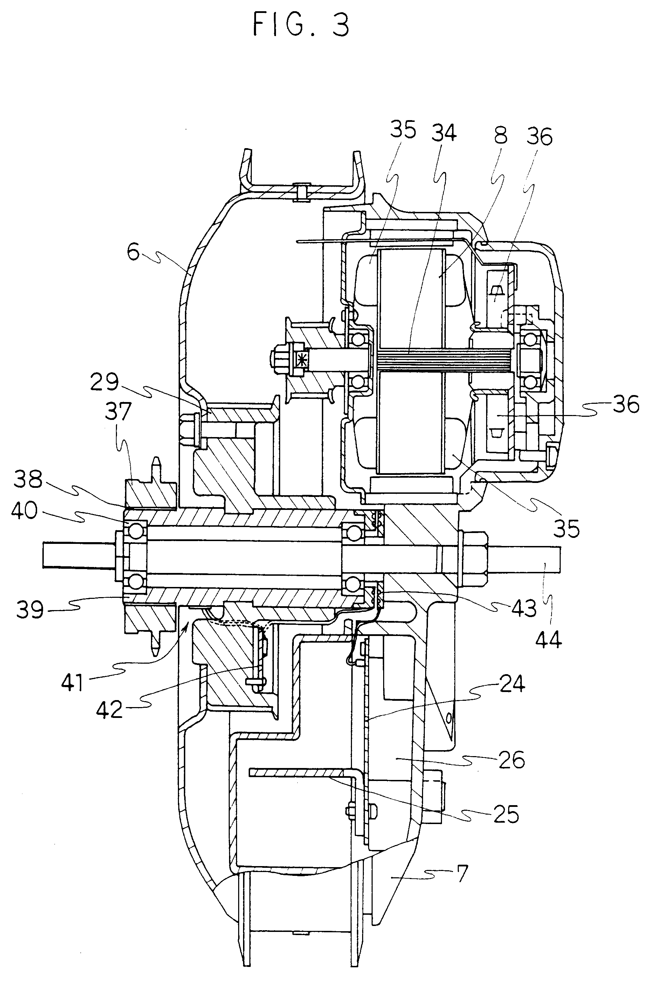

Next, the disk casing 5 will be described with reference to Figs. 2 and 3.

Fig. 2 shows constitution in the disk casing 5 and numeral 7 denotes the fixed side casing fixed to the main body of the electric bicycle 1. The fixed side casing 7 is provided with a control part 26 comprising a control substrate 24 and a radiator board 25 or so; a motor 8; a reduction mechanism 30 comprising three pulleys of the first pulley 27, the second pulley 28 and the last pulley 29; and transmission belts 31 connecting the reduction mechanism 30. The last pulley 29 of the reduction mechanism is fixed to the rotary side casing 6, and the first to the last pulleys are rotated by the transmission belt when the motor 8 rotates, whereby the rotary side casing 6 rotates with the decelerated last pulley 29.

Numeral 32 denotes a push member to adjust tension of the transmission belt 31.

Numeral 33 denotes an adjust screw to adjust tension of the transmission belt 31, and an oval hole is made at a fitting part of a rotary axle of the first pulley 27. Thus the first pulley 27 is designed to move in the direction to stretch the transmission belt 31 and be fixed by the adjust screw at its moved condition.

Numerals 34, 35 and 36 denote respectively a rotary axle, a coil part and a brush of the motor 8.

Numeral 37 denotes a chain sprocket to transmit driving force from the chain 12 to the rotary side casing 6. A free wheel 38 is disposed between the chain sprocket and the rotary side casing 6. The chain sprocket is designed not to transmit the driving force from the chain 12 to the rotary side casing 6 when the chain 12 rotates reversely.

Numeral 39 denotes a rotary axle 39 which is disposed concentrically on a periphery of an axletree 44 of the rear wheel 3 through a bearing 40, and the rotary shaft 39 is designed to unite with the rotary side casing 6. The axletree 44 is fixed to the main body 1, and the rotary side casing 6 fixed to the rotary axle 39 is adapted to rotate to rotate the rear wheel when the rotary axle 39 rotates around the axletree 44.

Numeral 41 denotes a torque detection part to detect force resisting to torque, that is, strain occurring in the rotary axle 39 when an user depresses the pedals 11, driving force is transmitted by the chain 12 and then the torque occurs in the rotary side casing 6. The torque detection part 41 is provided with an amplifier 42 in the last pulley 29 which amplifies a signal of magnitude of the torque, that is, strain detected at the torque detection part 41. The amplified signal is transmitted from the rotary side casing 6 to the control part 26 disposed to the fixed side casing 7 through a rotary transformer 43 without wiring. The rotary transformer 43 is adapted to supply an electric source to operate the amplifier 42 except transmitting the signal from the amplifier 42 to the control substrate 24 without wiring.

Although the rotary transformer 43 is used for transmitting the signal of the rotary part in the present invention, a slip ring or so which can transmit a signal even at the rotary part might be used.

The aforesaid torque detection part 41 utilizes strain guage as shown in Fig. 3 and detects strain of the rotary axle 39 generated by reaction force by means of variation in resistance of strain gauge to detect torque generated by man power when driving force of man power operates to the rotary axle 39. Besides a strain gauge, a semiconductor strain gauge might be used.

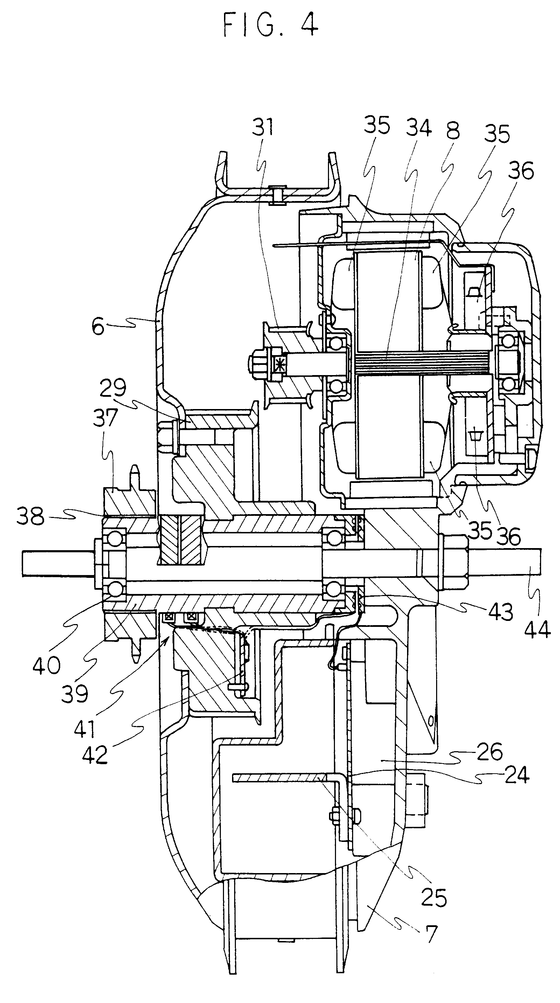

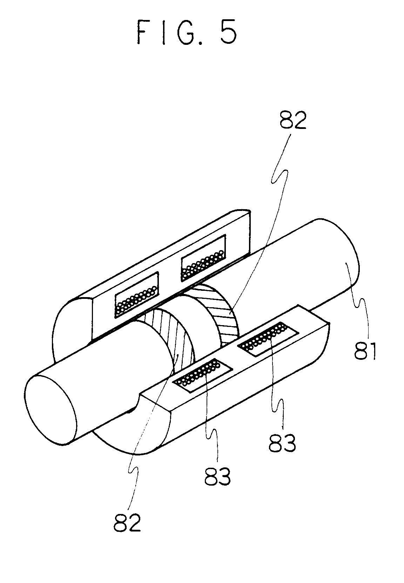

Although a strain guage is used in the torque detection part 41, a sensor to detect the torque by magnetic strain might be used for another embodiment as shown in Fig. 4. Since the other parts are similar to those in the aforesaid embodiment, explanation thereof is omitted. In the sensor based on magnetic strain, as shown in Fig. 5, two groups of plural grooves named knurling 82 in the direction of 45 degrees are notched vertically with each other at two places on a surface of the rotary axle 81, and an excitation coil and a detection coil 83 are respectively provided at two places on the outer surface of the rotary axle 81. When the rotary axle is rotated by the force of man power, tension stress and compression stress work in the rotary axle 81, so that the two groups of the knurling 82 are respectively tensed and compressed, whereby the one increases and the other decreases in permeability. Therefore, two variations of output voltage can be detected by the detection coil 83 when the rotary axle is excited at tens of kilohertz by the excitation coil 83 disposed on the outer surface, whereby detecting the torque by means of the variations. That is, the torque generated by man power can be detected and output.

Further, as another embodiment using the aforesaid sensor based on magnetic strain, when knurling is notched inside the rotary axle 39 and a detection coil is disposed to the axletree 44 of the rear wheel 3, since a signal detected by the detection coil can be transmitted from the fixed axletree 44 to the control substrate 24 in the fixed side casing 7, the rotary transformer 43 (refer to Figs. 2 and 4) becomes needless and the amplifier 42 can be accommodated in the control substrate 24. Therefore, the last pulley 29 becomes well balanced, and the number of parts can be decreased by the control substrate 24 including the amplifier.

In the aforesaid two embodiments, there are proposed examples of method detecting torque of man power by a strain gauge and by a magnetic strain, but the method is not limited thereto and any method to detect torque might be acceptable in the present invention. For example, following methods or so are considered: a method to detect torque by measuring strain of amorphous alloy stuck on the rotary axle, or a method wherein a surface elastic wave element is fitted on a rectangular plate disposed to a part where torque occurs and magnitude of torque generated by man power is detected by a signal of a frequency to oscillate depending on the torque when the torque occurs.

A method of magnetic recording type and a method based on a magnetic encoder can also detect the torque of man power. The method of magnetic recording type is a method wherein plural magnetic recording layers are disposed at determined axial spaces on an outer surface, two groups thereof are formed on the rotary axle, corresponding magnetic heads are respectively disposed opposite to the two groups. Signals from the two magnetic heads differ from each other under the influence of torsion of the rotary axle when the rotary axle is rotated by a force of man power, and therefore the torque can be detected by detecting difference between the signals. On the other hand, the method based on a magnetic encoder is a method wherein two magnetic drums attached with plural magnets in a row is disposed on an outer surface of the rotary axle, sensors to detect respectively the magnetic drums are disposed fixedly. Positional discrepancy between the two drums, that is, torsion of the rotary axle occurs depending on magnitude of the torque when the rotary axle rotates to rotate the magnetic drums, and therefore the difference is detected with the sensors.

As has been described, all of the devices for detecting torque detect how large force, that is, torque occurs in a rotary axle by detecting magnitude of torsion occurring in the rotary axle.

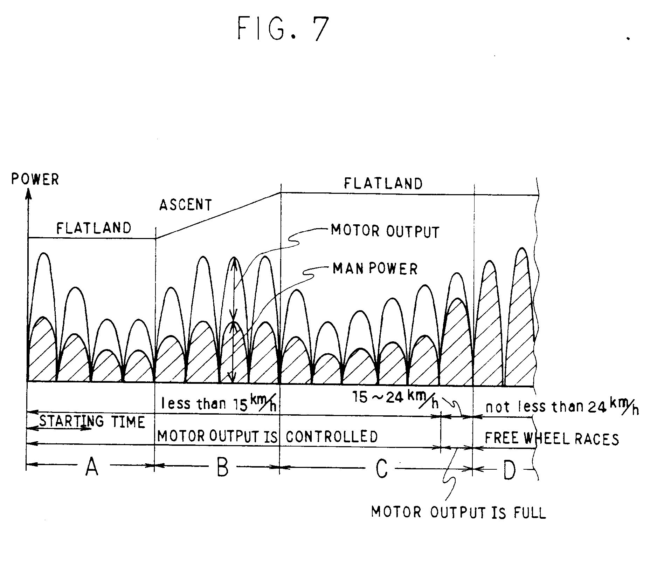

Next, operation to determine a rate of the driving force of the man power driving part 9 to the driving force of the electric driving part 10 will be described with reference to Fig. 7.

In Fig. 7, vertical axis represents power, namely, driving force loaded to the whole electric bicycle 1, and horizontal axis represents divisions of respective speeds and divisions between a flatland and an ascent. Plural mountains in the graph respectively denote a pedaling.

Firstly, Part A is explained as a part wherein a traveling road is a flatland and a state of force is at and after a starting time. In this case, when large torque is loaded by a man power driving part at the starting time, the same magnitude of torque as the torque is loaded by an electric driving part 9 and man power is supported at the rate of 1 to 1. The driving force by man power is also supported at the ratio of 1 to 1 by the electric driving part 9 after the starting time. The driving force by the motor 8 gradually decreases in the same manner if the driving force by man power decreases gradually. At this time, a traveling speed is less than 15 kilometers per hour.

Secondly, Part B is explained as a part wherein a traveling road is an ascent, the driving force by man power increases, and the driving force by the motor 8 also increases therewith. The driving force by man power is supported at the rate of 1 to 1 in this case like in the aforesaid case. At this time, the traveling speed is less than 15 kilometers per hour like in the aforesaid case.

Thirdly, Part C is explained as a part wherein the traveling road is supposed to change from the aforesaid ascent to a flatland, an aftereffect remains at first and a slight torque occurs until the ascent is finished to climb up completely. While the torque by man power increases to accelerate speed gradually, the driving force by the motor 8 increases correspondingly. When the speed exceeds 15 kilometers per hour, the ratio of the driving force by the motor 8 to the driving force by man power is controlled from 1 to 1 ratio, to decrease the rate of the driving force by the motor 8 gradually. In the manner of the control, the ratio of the driving force by the motor 8 is adapted to decrease linearly from 1 to 1 at 15 kilometers per hour so as to become 0 to 1 at 24 kilometers per hour.

Lastly, Part D is explained as a part wherein the traveling speed is supposed to be not less than 24 kilometers per hour and only the man power driving part 10 is adapted to contribute to the traveling to keep safety speed without operation of the electric driving part 9.

As has been described, since the disk casing 5 has the torque detection part 41 therein, compact constitution is accomplished. Further since the torque can be detected in consideration of all weight of the parts moved by man power such as the rotary side casing 6, the torque by man power varying subtly can be detected precisely, and therefore the driving of the motor 8 can be varied subtly to support the driving force exactly.

Since the disk casing 5 also has the control part 26 therein, the signal from the torque detection part 41 can be transmitted with low loss, and therefore the driving by the motor 8 can be varied subtly depending on the magnitude of the torque by man power acting subtly to support the driving force exactly.

Further, since the torque detection part 41 detects only by strain of the rotary axle 39, space can be saved, and since the torque is detected at the place loaded with the all weight of the rotary part, the torque can be detected precisely to support the driving force exactly.

Still further, since the torque is detected at a connection part between the rotary side casing 6 and the fixed side casing 7 and the torque detection part 41 is disposed to the rotary side casing 6, the torque can be detected precisely to enable exact support by the electric driving part 9. Moreover, since the torque detection part 41 to detect the torque is disposed at the side rotated by the man power driving part 10, the torque by man power can be detected precisely.

In addition, since the torque detection part 41 is attached to the rotary side casing 6 to detect the torque precisely and the rotary transformer 43 is used to transmit the torque from the rotary side casing 6 to the control part 26 of the fixed side casing 7, a signal can be transmitted from the rotary side casing 6 to the fixed side casing 7.

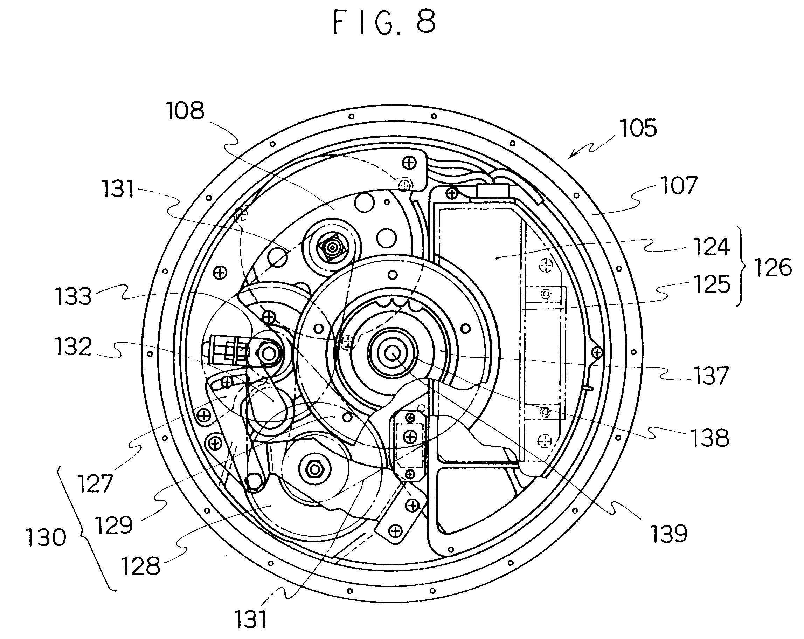

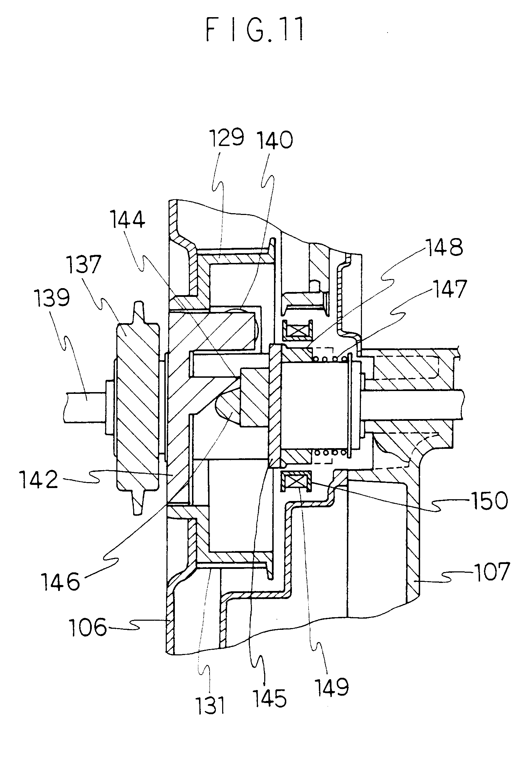

Embodiments according to another embodiment of the invention will be described with reference to Figs. 8 to 20. By the way, since whole constitution of the embodiment is similar to that of the first embodiment shown in Fig. 1, description thereof is omitted.

Fig. 8 is a front view showing constitution of one embodiment of a disk casing 105 according to the invention. In Fig. 8, numeral 107 denotes a fixed side casing fixed to the main body of the electric bicycle. The fixed side casing 107 is provided with a control part 126 comprising a control substrate 124, a radiator board 125 or so; a motor 108; a reduction mechanism 130 comprising three pulleys of the first pulley 127, the second pulley 128 and the last pulley 129; and transmission belts 131 connecting between respective two of the pulleys and between the reduction mechanism 130 and the motor 108. The last pulley 129 is fixed to the rotary casing 106, and the first pulley 127 to the last pulley 129 are rotated by the transmission belts 131 when the motor 108 rotates, and the rotary side casing 106 is decelerated and rotates with the last pulley. The smaller pulley of the second pulley 128 connected to the last pulley 129 is intervened with an one-way clutch (not shown) so that the motor 108 would not rotate, that is, pedals would be worked lightly when the motor 108 is operated with force of the pedals.

A push member 132 is disposed between the first pulley 127 and the second pulley 128 to adjust tension of the belt 131 connecting the first and second pulleys 127, 128, and a rotary head of the push member 132 is rotationally touched to the inside of the belt 131 to stretch the belt 131 by pushing it outward.

An oval hole is formed at a part of the first pulley 127 fitted with a rotary axle and is screwed with an adjust screw 133. The first pulley is adapted to be fixed by the adjust screw 133 at a condition wherein the first pulley is moved in the direction to stretch the transmission belt 131.

A chain sprocket 137 is attached to an axletree of a rear wheel 139 through a freewheel 138 to transmit force from the chain to the rotary side casing 106, and the driving force from the chain is designed not to be transmitted to the rotary side casing 106 by the freewheel when the chain rotates reversely.

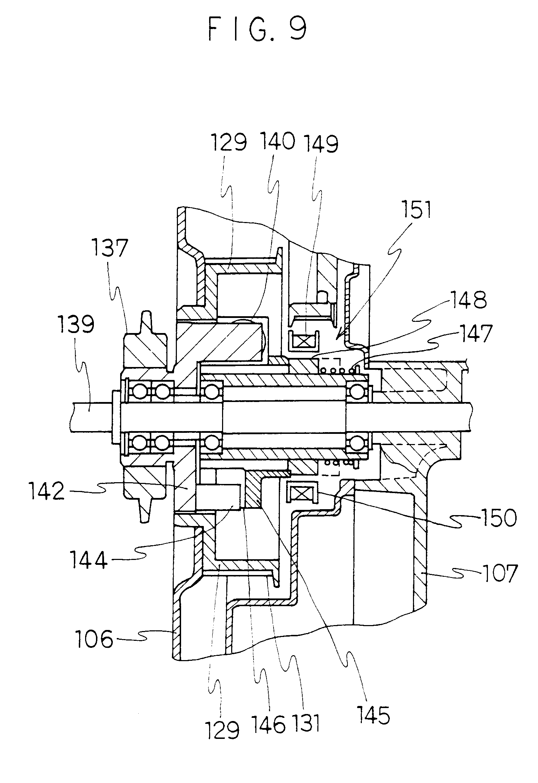

Next, constitution of the last pulley will be described with reference to Figs. 9 to 11.

Figs. 9, 10 and 11 are respectively a sectional side view, a front view and another sectional side view showing the constitution of the last pulley. Springs (elastic bodies) 140, 140 are disposed on a part of the axletree 139 fitted with the last pulley 129 so as to be symmetrical about the axletree 139 and approximately tangential to the axletree 139. The springs 140, 140 are respectively fixed to the last pulley 129 at one sides and are open and flexible at the other sides. The spring 140 is covered with a cover 134 attached to the last pulley 129. Then the springs is adapted to be easily forced by a push member 143 when the rear wheel is operated with stepping force.

A pressured member 141 which is convex in profile is touched to the open side of the spring 140. The pressured member 141 has a smaller part and a larger part than a diameter of the spring 140, and the smaller part is attached to insert into the spring 140 and the larger part is attached to cover the spring 140. The pressured member 141 is made of slippery material, such as steel, ceramics or so.

A rotary board or component 142 which is rotated by rotation of the chain sprocket 137 is provided around the axletree 139 and the push members 143 which push the pressured members 141 with rotation of the chain sprocket 137 are provided symmetrically about the axletree 139 to the rotary board 142. The push members 143 are also made of slippery material, such as steel, ceramics or so like the aforesaid pressured member. A rubber plate 135 to protect the pressured part pushed by urging force of the spring 140 from impact is provided to the last pulley 129 at a part opposite to the back of the face touching to the pressured member 141 of the push member 143.

The rotary board 142 is concentrically inserted into the inside of the last pulley 129 and rotates with the last pulley 129 when the push member 143 pushes the spring 140. Since a pushed position slips slightly when the push member 143 pushes the pressured member 141, a part touching to the pressured member 141 is designed to be a curved surface.

Further, two inclined part 144 formed in the direction of rotation are formed symmetrically about the axletree 139 at the rotary board 142 and the inclined parts 144 rotates with rotation of the rotary board 142.

A slide member 145 is slidably provided around the axletree 139 on the side of the fixed casing 107 apart from the rotary board 142 in the direction to the axletree 139, and a projection 146 is provided at a part of the slide part 145 opposite to the rotary board 142 so as to touch to the inclined part 144 of the rotary board 142. The slide member 145 is adapted to be urged from the opposite side of the projection 146 to the rotary board 142 by an elastic body, that is, the spring 147. Therefore, when the rotary board 142 rotates, the projection 146 of the slide part 145 is pushed toward the rotary board 142 along a slope of the inclined part 144 by an urging force of the spring 147 and the slide member 145 moves toward the rotary board 142 by a distance depending on an amount of rotation of the rotary board 142. When the rotary board 142 returns to an original position, the projection 146 is pushed toward the fixed side casing 107 by the inclined part 144 of the rotary board 142 and the slide member 145 returns to the original position on the side of the fixed casing 107 with the shrinkage of the spring 147. Still, the rotary board 142 and the slide member 145 are named converter members.

Further, the projection 146 might be pushed toward the fixed side casing 107 by the inclined part 144 of the rotary board 142 when the rotary board 142 rotates, and the slide member 145 might return to the original position on the side of the rotary board 142 by the operation of the spring 147 when the rotary board 142 returns to the original position to remove the pressure on the projection 146.

Ferrite 148 which is a magnetic member installed to the torque detection part 151 is provided on the side of the fixed side casing 107 of the slide member 145 and is adapted to move according to the movement of the slide member 145. On the other hand, in the fixed side casing 107, a coil bobbin 150 is disposed in a moving area of the ferrite 148 and opposites to the ferrite 148, and a coil 149 is wound around the coil bobbin 150.

Next, drive by man power and detection of torque based thereon will be described.

When a main body of an electric bicycle 1 starts traveling, an user operates force on pedals 11 to travel. At this time, though a rear wheel 3 is operated by large force to stop, a chain sprocket 137 and a rotary board 142 are going to rotate. Therefore, the rotary board 142 pushes the spring 140 through the push member 143 and the pressured member 141, the spring 140 pushes the last pulley 129, and the rotary side casing 106 fixed to the last pulley 129 and the rear wheel 3 rotate to move the main body of the electric bicycle 1. At this time, since the rotary board 142 is given large torque, the spring 140 shrinks largely, the rotary board 142 rotates therewith and the inclined part 144 also rotates. When the rotary board 142 rotates, the projection 146 of the slide member 145 is pushed toward the rotary board 142 along the slope of the inclined part 144 by the urging force of the spring 147, so that the slide member 145 moves toward the rotary board 142 by a distance depending on an amount of rotation of the rotary board 142.

When the slide member 145 moves to the side of the rotary board 142, the ferrite 148 moves in the coil 149 to change inductance of the coil 149. That is, the larger the torque generated in the rotary board 142 becomes, the larger volume of the ferrite 148 inserted into the coil 149 becomes and then the inductance of the coil 149 also becomes. The control part 126 detects variation of the torque by detecting variation of the inductance to control drive of the motor 108 on the basis of the detected result.

On the other hand, when the user gives no torque at time of traveling flatland, the rotary board 142 rotates with the last pulley 129. Since no torque is generated in this condition, the spring does not shrink and the slide member 145 does not move. Accordingly, since the inductance of the coil 149 does not vary, voltage impressed to the coil 149 does not vary and drive by the motor 108 is not performed.

When the user accelerates on a flatland and an ascent, the spring 140 shrinks under the influence of torque generated by the acceleration like at the aforesaid starting time, and therefore the rotary board 142 rotates according to the torque. Then, the projection 146 touched to the inclined part 144 and the slide part 145 move and the ferrite 148 is inserted into the coil 149, thereby the inductance of the coil 149 increases and the control part 126 controls the drive of the motor 108 according to the increase thereof.

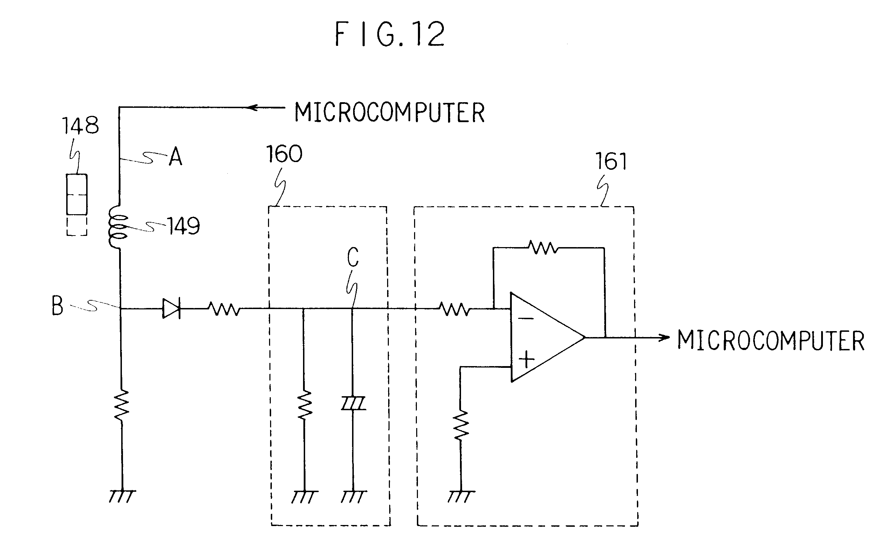

Next, a circuit of a torque detection part 151 will be described with reference to Fig. 12.

Fig. 12 is a circuit diagram of a torque detection part according to the second embodiment of the invention. The aforesaid coil 149 is adapted to be impressed with a pulse voltage described later from a microcomputer (hereinafter referred to as "micom") provided to the control part 126 (refer to Fig. 8). A resistance voltage connected to the coil 149 in series outputs a pulse of magnitude depending on a relative distance between the coil 149 and the ferrite 148. The resistance voltage is converted to a leveled signal in a DC conversion part 160 and given to an amplification part 161 to be amplified here and input to the micom.

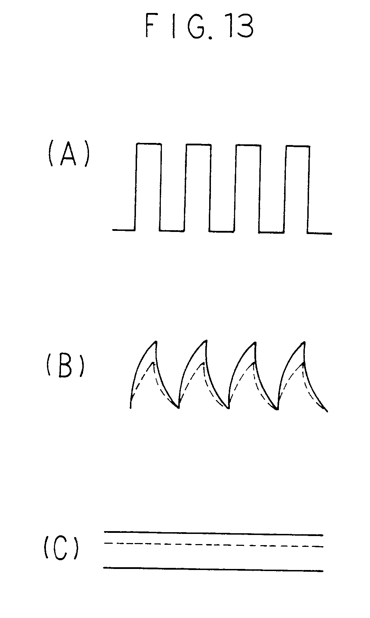

Fig. 13 is a wave form chart at the each point in the circuit shown in Fig. 12, and (A), (B) and (C) denote respectively pulse shapes at Point A of the entrance side of the coil, at Point B of the exit side of the coil and at Point C of the exit side of the DC conversion part (refer to Fig. 12). A rectangular pulse voltage is impressed to the coil as shown in Fig. 13(A). Since inductance of the coil becomes large when such coil is approached by the ferrite, the pulses become sawlike waves (shown by broken lines) which are lower in height than the sawlike waves shown by solid lines. When the heights of the pulses are leveled by the DC conversion part, a signal (shown by broken lines) of a level which is lower than a level of a signal shown by a solid line by an inherent height equivalent to approached amount of the ferrite to the coil.

In this way, since the torque is converted to the movement of the ferrite 148 in the direction of the axletree 139 and the variation of inductance of the coil varied by the movement is converted to the variation of voltage thereby to extract an electric signal, the torque can be detected precisely and delicately to support man power under exact control.

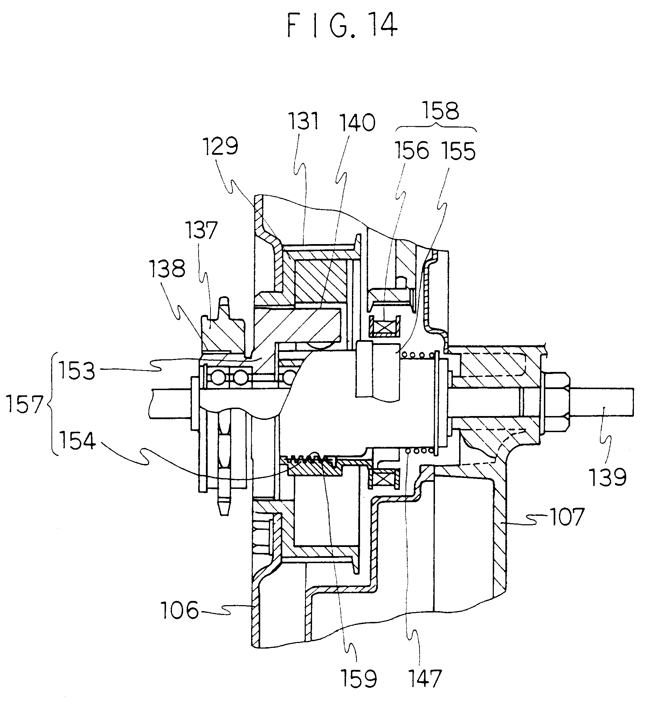

Fig. 14 is a sectional side view showing constitution of another last pulley of an electric bicycle according to the invention and the constitution does not include the slide member shown in Fig. 9.

Since this embodiment differs from the aforesaid embodiment only in the rotary board, explanations will be omitted in the common parts but given to the rotary board.

The rotary board 153 of the conversion member 157 is provided around the axletree 139 and is, like in the aforesaid case, adapted to rotate with rotation of the chain sprocket 137, push the last pulley 129 through the rotary board 153, and rotate both the rotary casing 106 fixed to the last pulley 129 and the rear wheel. A screw gear 159 is formed around the axletree 139 and a screw 154 screwing with a screw gear 159 is formed in the rotary board 153. The rotary board 153 rotates with rotation of the chain sprocket 137 and screws to move toward the fixed side casing 107.

The ferrite 155 of the torque detection part 158 is disposed between the screw 154 of the rotary board 153 and the spring 147, and the rotary board 153 moves toward the fixed side casing 107 to insert the ferrite 155 into the coil. When the rotary board 153 inversely moves toward the rotary casing 106, the ferrite 155 moves toward the rotary board 153 under the influence of an urging force of the spring 147 with the rotary board 153.

In this embodiment, like in the aforesaid embodiment, when torque is generated by man power, the rotary board 153 rotates, the ferrite 155 is inserted into the coil 156 and inductance of the coil 156 becomes large. Drive of the motor is controlled depending on magnitude of the level of the voltage by detecting the variation.

Although the ferrite of magnetic material is adapted to be inserted into the coil in the aforesaid embodiment, the material is not limited thereto and might be conductive material such as copper, aluminum or so.

In this case, the combination of the conductive member and the coil can be regarded as a transformer, wherin the primary side and the secondary side are respectively composed of a coil with plural turns and a coil with a turn, variation of a distance of the secondary coil is converted to variation of magnetic coupling, and therefore inductance of the primary coil decreases when the coil with a turn gets near and inductance of the primary coil increases when the coil with a turn gets away. From this, the variation can be converted to variation of voltage to control drive of the motor.

Although the position of the ferrite is adapted to move in the coil, since inductance of the coil varies only by the approach of the ferrite, it is needless to say that constitution wherein the ferrite is approached to the coil but is not inserted into the coil by the movement of the slide member or the rotary board might be adopted.

Further, although the ferrite of magnetic material is adapted to be inserted into the coil in the aforesaid embodiment, it is needless to say that the present invention is not limited thereto and constitution wherein the coil is attached to the slide member and covers the ferrite might be adopted.

As has been described, since torque generated by stepping force to the pedals is adapted to be converted to the direction of the axletree by the conversion member, a displacement of the movement of the conversion member is adapted to be detected by the torque detection part to control the drive of the motor depending on magnitude of the displacement and the disk casing also has the electric drive part, the torque detection part and the control part within, a compact constitution can be accomplished, the torque can be detected in consideration of all weight operated to the rotary side casing and the torque by man power varying subtly can be detected precisely. Further, since the torque is detected by the movement in the direction of the axletree, the torque can be detected precisely and delicately to support man power under exact control.

Since the magnetic member or the electric conductive member moves in or near the coil fixed in the disk casing depending on man power torque whereby the torque can be detected as variation of voltage depending on variation of inductance by the magnetic member and the electric, the torque can be detected precisely and delicately to support man power under exact control.

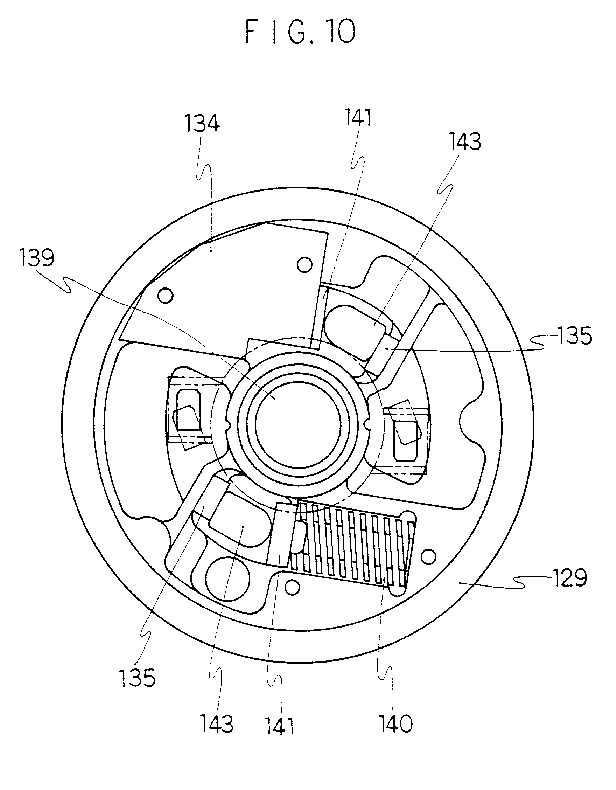

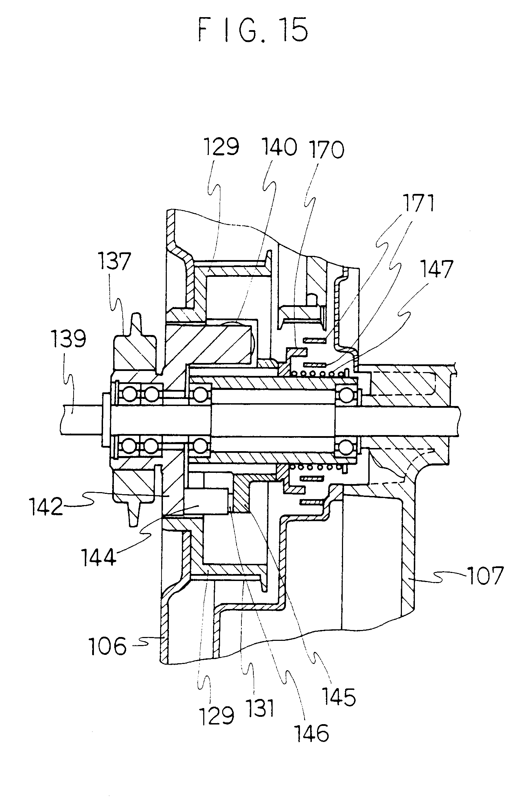

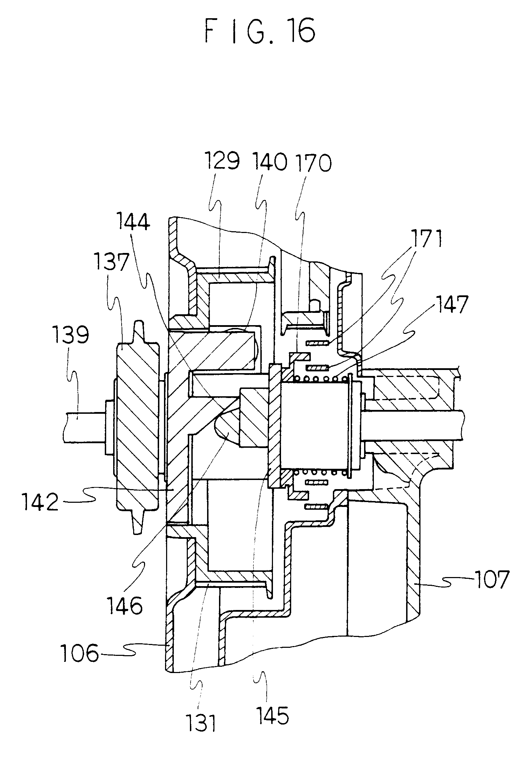

Figs. 15 and 16 are sectional side views showing constitution of another torque detection part according to the present invention wherein the torque detection part is adapted to detect torque by variation of permittivity. By the way, in Figs. 15 and 16, the corresponding parts in Figs. 9 and 10 will be given the same symbols to omit explanations therefor. A cylindrical dielectric 170 is attached to the end a slide member 145 opposite to a spring 147. Diameters of the dielectric 170 are adapted to be approximately the same with the slide member 145 on the side of the slide member 145 and to be predetermined sizes larger than the slide member 145 on the other side thereof. When the slide member 145 moves to the side of a fixed side casing 107 by the rotation of the rotary board 142, the dielectric 170 moves accordingly in the same direction, while when the rotary board 142 returns to the original position, the dielectric moves to the side of the rotary board 142 by an urging force of a spring 147. Further, electrodes 171, 171 are disposed concentrically with an axletree 139 at a determined distance and the dielectric 170 is adapted to advance and retreat in a gap between the electrodes 171, 171.

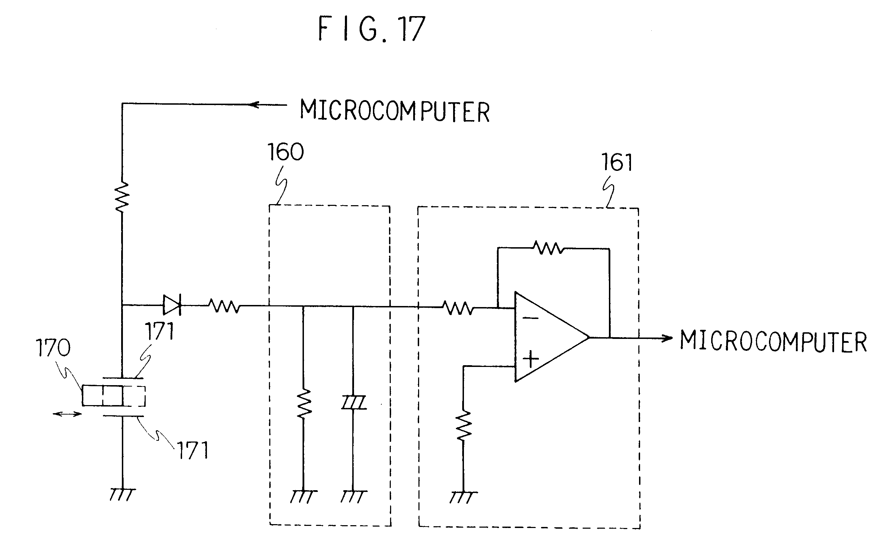

Fig. 17 is a circuit diagram of a torque detection part shown in Fig. 15. One of the electrode 171, 171 is adapted to be impressed with pulses of a predetermined voltage from a micom provided to a control part 126 (refer to Fig. 8), and the other is earthed. When the slide member slides to the side of the fixed side casing with rotation of the rotary board to move the dielectric 170, the dielectric is inserted into the gap between the electrodes 171, 171 and electrostatic capacity of the electrodes 171, 171 increases depending on the amount of the movement, so that the pulses impressed by the micom become sawlike pulses which are low in height. The pulses are given to a DC conversion part 160, converted to a leveled signal and given to the amplification part 161 thereafter. When an amplified signal is inputted into the micom, the micom compares the inputted amplified signal with a standard signal and calculates the amount of the movement to control drive of the motor depending on the calculated amount of the movement.

Still, although the dielectric is adapted to be moved by the slide member in this embodiment, it is needless to say that the present invention is not limited thereto and the electrodes might be adapted to move by the slide member.

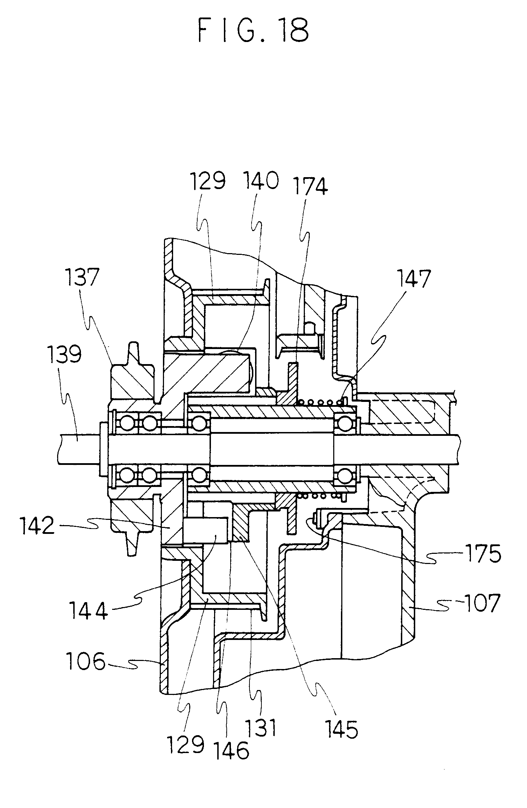

Fig. 18 is a sectional side view showing a constitution of still another torque detection part wherein the torque detection part is adapted to detect torque by variation of magnetic flux density. An annular magnet 174 is disposed on an end of the slide member opposite to the rotary board 142. A magnetic detector 175 such as a Hall element, a magnetic resistance element or so is attached to the rotary side casing 106 to oppose to the magnet 174. In this torque detection part, the rotary board 142 rotates by torque given, and the slide member 145 slides to the side of fixed side casing 107. The magnet 174 accordingly moves to approach to the magnetic detector 175. When the magnet approaches to the magnetic detector 175, magnetic flux density at the magnetic detector increases and an output of the magnetic detector becomes large to detect the magnitude of the given torque.

Although the slide member is provided with the magnet in this embodiment, it is needless to say that the present invention is not limited thereto and the slide member might be provided with a magnetic detector and the rotary side casing 106 might be provided with a magnet.

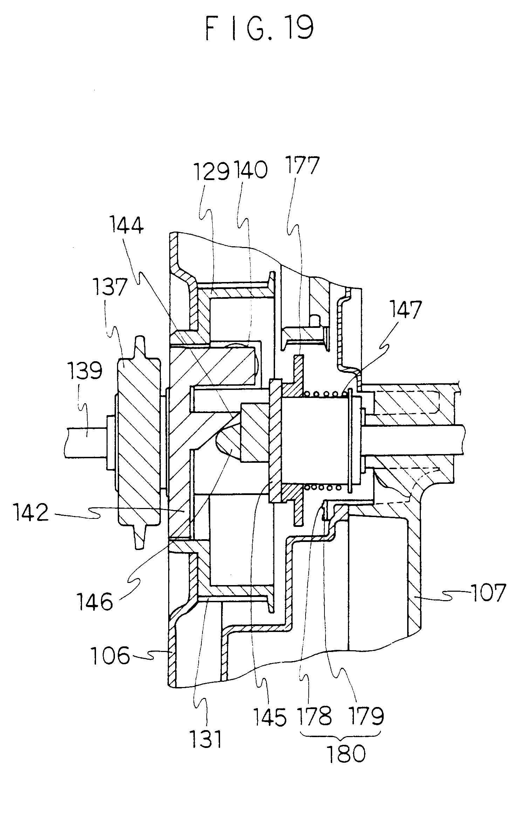

Fig. 19 is a sectional side view showing a constitution of still another torque detection part according to the invention wherein the torque detection part is adapted to detect torque by variation of a light reception position of reflection light. An annular reflection board 177 is disposed on an end of the slide member opposite to the rotary board 142, and an optical part 180 which is provided with a luminous part 178 including a lens and a LED (light emitting diode); and a light reception part 179 including a PSD (semiconductor position detection element or optical position detection element), a linear type CCD (charge transfer device) or so is attached to the fixed side casing 107 to oppose to the reflection board 177.

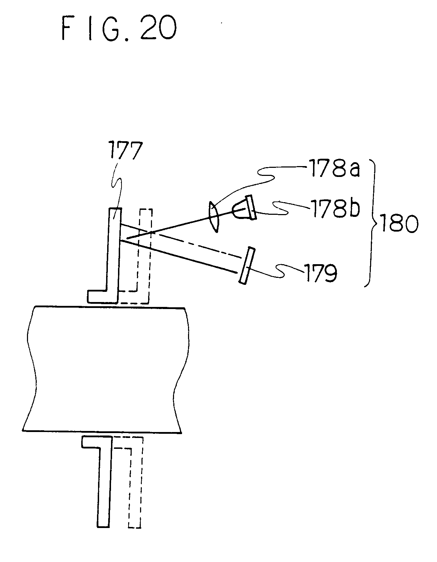

Fig. 20 is a partially enlarged view of an optical part 180 and a reflection board 177 shown in Fig. 19. Light emitted from the LED 178b is focussed by the lens 178a and entered to the reflection board 177 at a predetermined incident angle to be reflected by the reflection board 177. In a course of the reflection light, a light reception part 179 is arranged so as to receive reflection light approximately perpendicularly.

In such a torque detection part, when torque is operated, the rotary board 142 rotates, the slide member 145 slides to the side of the fixed side casing 107, and the reflection board 177 accordingly moves to approach to the luminous part 178. When the reflection board 177 approaches to the luminous part 178 as shown by the broken lines in Fig. 20, since the course of the reflection light correspondingly moves parallel as shown by the chain lines in Fig. 20, a position of light reception on the light reception part 179 moves parallel. Accordingly magnitude of the torque operated can be detected by finding the variation of the position of light reception.

Although the slide member is provided with the reflection board in this embodiment, it is needless to say that the present invention is not limited thereto and the slide member might be provided with a luminous part.

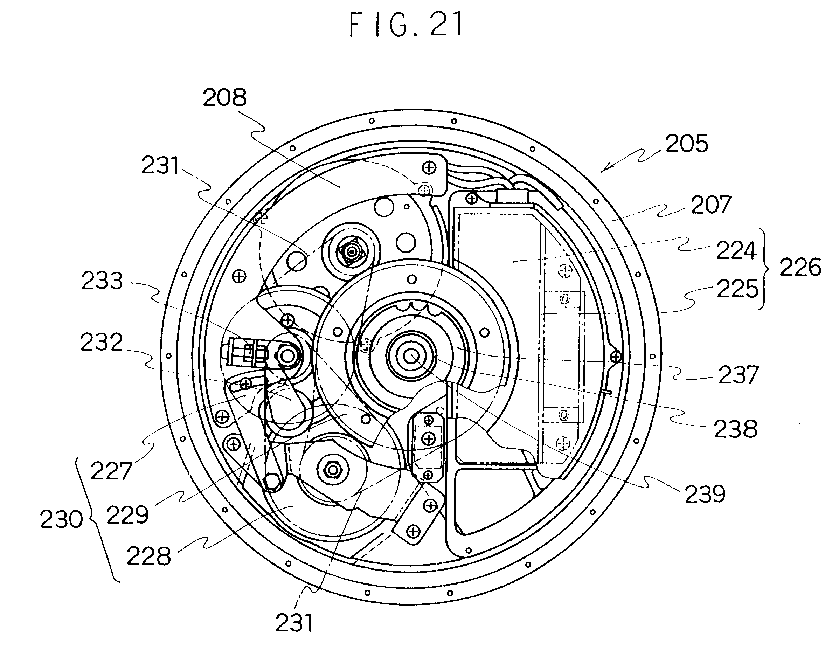

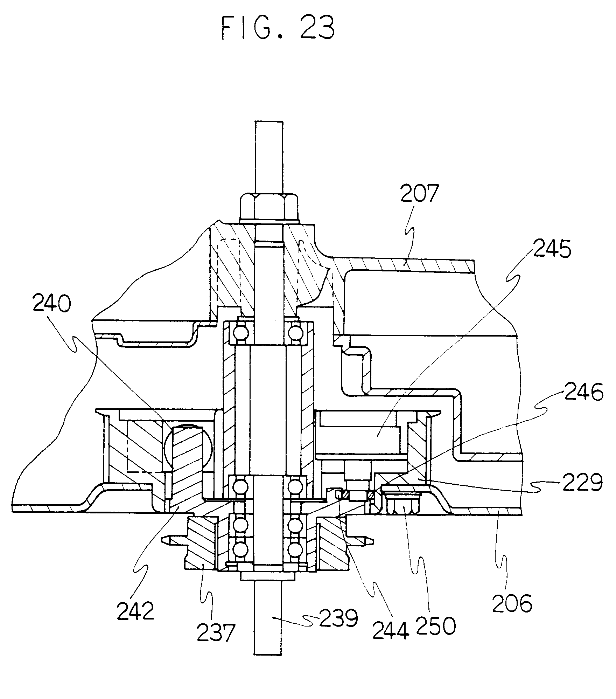

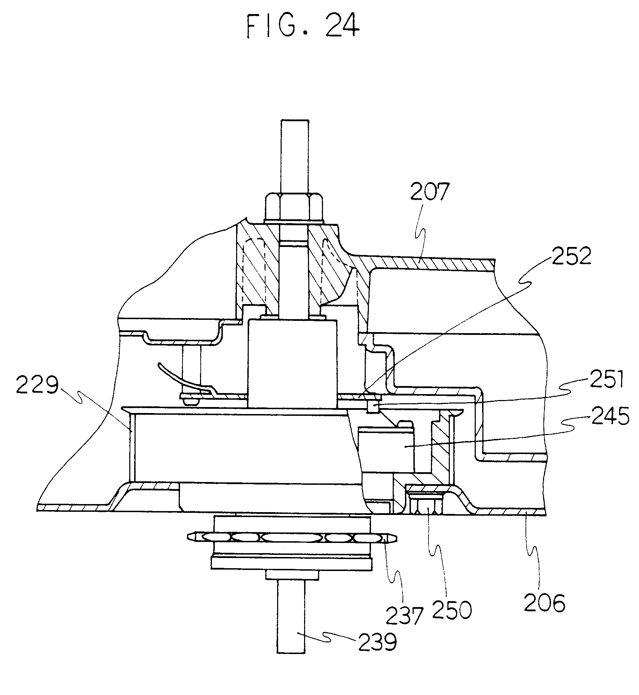

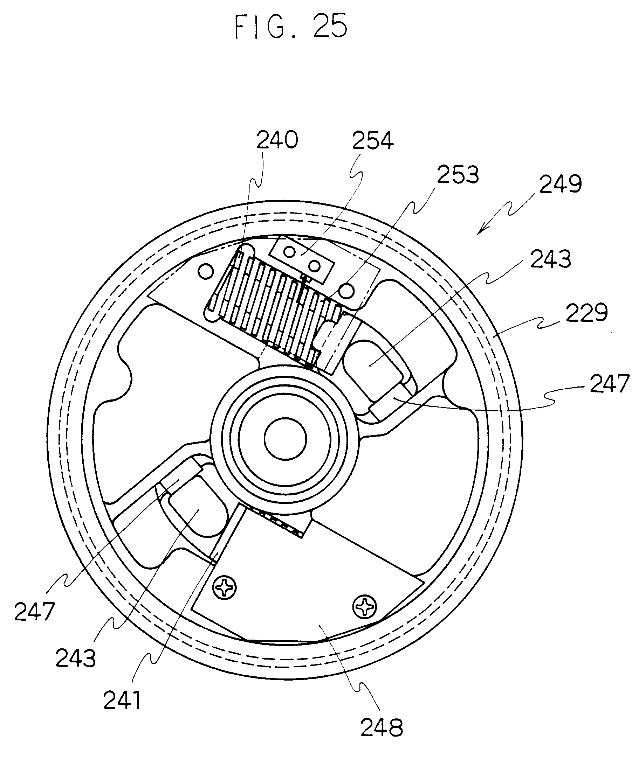

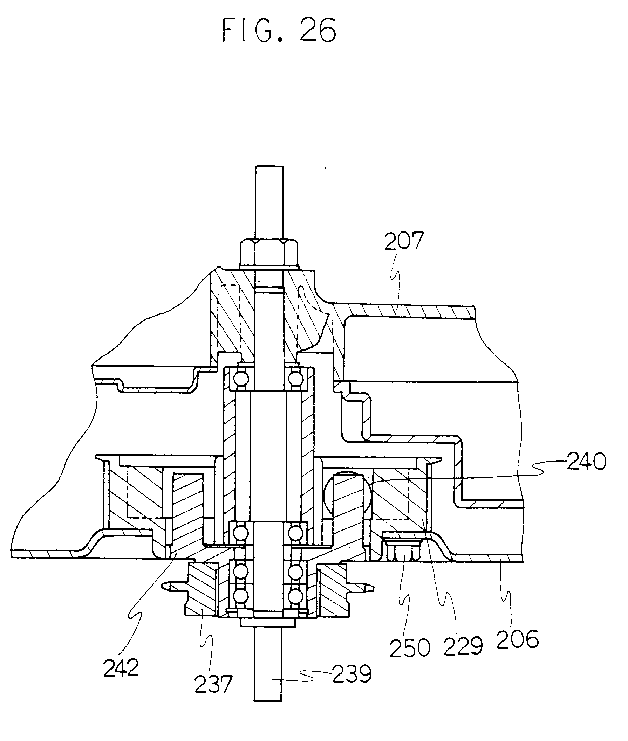

Next, a third embodiment of the invention will be described with reference to Figs. 21 to 26. By the way, since a total constitution of this embodiment is the same as the first embodiment shown in Fig. 1, explanations therefor will be omitted.

Fig. 21 is a view showing constitution in a disk casing 205 according to one embodiment of the invention, numeral 207 denotes a fixed side casing fixed to a main body of an electric bicycle 201. The fixed side casing 207 is provided with a control part 226 comprising a control substrate 224, a radiator board 225 and so on; a motor 208; a reduction mechanism 230 comprising three pulleys of the first pulley 227, the second pulley 228 and the last pulley 229; and transmission belts 231 connecting the reduction mechanism 230. The last pulley 229 of the reduction mechanism 230 is fixed to the rotary side casing 206, and the first to the last pulleys are rotated by the transmission belt 231 to be decelerated when the motor 208 rotates, whereby the rotary side casing 206 rotates with the last pulley 229. The smaller pulley of the second pulley 228 connected with the second pulley 228 and the last pulley is interposed with an one-way clutch so that the motor 208 might not rotate, that is, pedals might be worked lightly when the motor 208 is operated with force of the pedals 11.

Numeral 232 denotes a push member to adjust tension of the transmission belt 231.

Numeral 233 denotes an adjust screw to adjust tension of the transmission belt 231 and an oval hole is formed at a part of the first pulley fitted with a rotary axle. The first pulley is adapted to be moved in the direction to stretch the transmission belt 231 and to be fixed by the adjust screw 233 at a condition wherein the first pulley is moved.

Numeral 237 denotes a chain sprocket to transmit driving force from the chain 12 to the rotary side casing 206. A free wheel 238 is disposed between the chain sprocket 237 and the rotary side casing 206, and then the chain sprocket 237 is designed not to transmit the driving force from the chain 12 to the rotary side casing 206 when the chain 12 rotates reversely.

Numeral 239 denotes an axletree of a rear wheel 3.

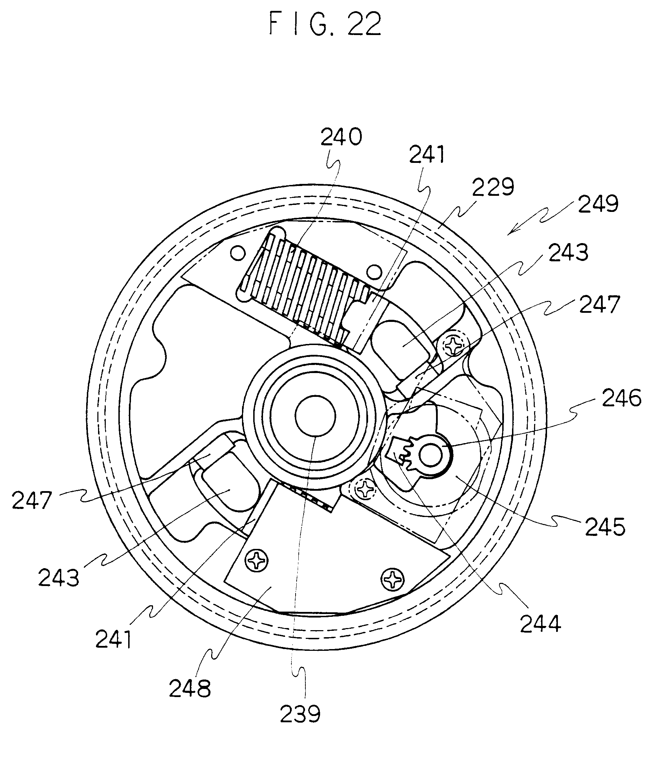

To be described in detail with reference to Figs. 22 to 24 is constitution of the last pulley 229.

Numeral 240 denotes elastic bodies, that is, springs disposed at two places symmetrically about the axletree in the last pulley 229, and the springs 240 are fixed to the last pulley 229 on the side of an operation body and are open and flexible on the other sides.

Numeral 241 denotes a pressured member touched to the open side of the spring 240, and the pressured member 241 has a shorter part and a longer part than a diameter of the spring 240 and the shorter part is inserted into the spring 240 to be attached thereto.

Numeral 242 denotes a rotary board or component which is rotated by rotation of the chain sprocket 237 and is disposed around the axletree 239. The rotary board 242 is provided symmetrically about the axletree 239 with push members 243 which push the pressured members 241 with rotation of the chain sprocket 237.

The rotary board 242 is concentrically inserted into the inside of the last pulley 229 and rotates with the last pulley 229 when the push member 243 pushes the spring 240. Since a pushing position slips slightly when the push member 243 pushes the pressured member 241, a part touching to the pressured member 241 is adapted to be a curved surface. Further, the rotary board 242 is provided with a gear part 244 between the two pressured member 241 and the gear part 244 is interlocked with a small gear 246 which changes value of a potentiometer 245 disposed nearby. Accordingly displacement of expansion and contraction of the springs 240 generated by pedaling of man power can be read by variation of value of the potentiometer 245.

Numeral 247 denotes a rubber plate to protect the pressured member 241 pushed by urging force of the spring 240 from impact.

Numeral 248 denotes a cover to cover the spring 240.

The springs 240, the rotary board 242 and the potentiometer 245 which are attached to the last pulley 229 are collectively named a torque detection part 249.

In explanation of movement of the last pulley 229, when force is operated from the man power driving part 10, the chain sprocket 237 is pushed in the direction to rotate and the rotary board 242 accordingly rotates, so that the push member 243 disposed to the rotary member 242 pushes the spring 240 through the pressured member 241 to rotate the last pulley 229 by the force. Since the last pulley 229 and the rotary side casing 206 are fixed by the screw 250, the rotary side casing 206 rotates to rotate the wheel 3. At this time, when pedaling force is operated by the man power driving part 10 for starting, accelerating and so on, the rotary board 242 is adapted to rotate to shrink the spring 240. In the case of normal traveling, since pedaling force is not so largely operated by the man power driving part 10, expansion and contraction of the springs 240 is not so generated. That is, the spring 240 is adapted to shrink only when the pedaling force is operated by the man power driving part 10.

Numeral 251 denotes a rotor to extract signals detected by the potentiometer 245, and the rotor 251 rotates with the last pulley 229. The potentiometer of the rotor 251 is also provided with two terminals.

Numeral 252 denotes a slip ring which is fixed to the rotary side casing 206 and is designed to transmit the signals from the rotor 251 to the control part 226. The slip ring 252 always touches to the rotating rotor 251 to transmit the signals.

Although the rotor 252 and the slip ring 252 are used to transmit the signals detected by the rotary side casing 206 to the fixed side casing 207 in the present invention, a rotary transformer or so might be used.

Next, another embodiment will be described.

This embodiment is a method to detect pedaling force by a variable resistor in place of the potentiometer 245 used in the aforesaid embodiment, and then the common parts with those of the aforesaid embodiment are given the same symbols to omit explanations therfor.

In this embodiment, like in the aforesaid embodiment, when pedaling force is operated by the pedals, the rotary board 242 is rotated and the spring 240 is pushed to move the last pulley 229, the disk casing 205 and the rear wheel 3. Only when torque by the pedaling force is operated on the occasion of traveling, the spring 240 is adapted to shrink depending on magnitude of the torque.

Numeral 253 denotes an operation body which is disposed in the middle of the spring 240 and is made of a solid steel board. The operation body 253 moves coincidentally with expansion and contraction of the spring 240. The operation body 253 also moves in the direction to change resistance of the variable resistor disposed at the side of the spring 240. Although the operation body is made of a steel board or so in this embodiment, anything such as a stick of resin or so might be used as far as the operation body operates the variable resistor 254 with the movement of the spring 240.

In this embodiment, like in the aforesaid embodiment, since the torque detection part 249 rotates in the rotary side casing 206 on the occasion of traveling, combination of the rotor 251 and the slip ring 252, the rotary transformer or so is adapted to transmit the detected signals.

As mentioned above, since the spring 240 is disposed between the pedals 11 and the rear wheel 3 to rotate the rear wheel 3 by pedaling force of the pedals 11 through the spring 240 and the torque detection part 249 to detect expansion and contraction of the spring 240 is disposed within the disk casing 205, simple constitution can detect precisely the torque generated by man power and drive the motor 208 exactly depending on the torque to support the driving force by man power.

As has been described, in the first embodiment, since the torque detection part is disposed within the disk casing, compact constitution can be accomplished, and the torque can be detected in consideration of all weight of parts moved by man power such as the rotary side casing or so, the torque by man power varying subtly can be detected precisely, and therefore the drive by the motor can be changed subtly to support the driving exactly.

Since the disk casing also has the control part therein, the signal from the torque detection part can be transmitted with low loss, and therefore the driving by the motor can be varied subtly depending on the magnetude of the torque generated by man power acting subtly to support the driving force exactly.

Since the torque detection part detects strain of the rotary axle, space can be saved, and since the torque is detected at the place loaded with the all weight of the rotary parts, the torque can be detected precisely to support the driving force exactly.

Further, since the torque is detected at the connection part between the rotary side casing and the fixed side casing and the torque detection part is disposed to the rotary side casing, the torque can be detected precisely to support exactly by the electric driving part. Moreover, since the torque detection part to detect the torque is disposed at the side rotated by the man power driving part, the torque by man power can be detected precisely.

Still further, since the freewheel is disposed between the man power driving part and the rotary axle, and the bearing is disposed between the axletree of the wheel iand the rotary axle, the torque is detected to operate the electric driving part only when the man power driving part is rotated in the normal direction, whereby exact support can be carried out only on the occasion of traveling forward.

In addition, since the torque detection part is attached to the rotary side casing to detect the torque precisely and the rotary transformer is used to transmit the torque from the rotary side casing to the control part of the fixed side casing, signals detected by the rotary casing can be transmitted to the fixed side casing.

In the electric bicycle according to an embodiment of the invention, the constitution thereof is made compact, the torque can be detected in consideration of the all weight operated to the rotary side casing and the torque generated by man power varying subtly can be detected precisely. Further, since the torque is detected by the movement in the direction of the axletree, amount of the displacement can be set large and therefore the torque can be detected precisely and delicately to support man power under exact control.

Further, in the electric bicycle, since the variation of the torque generated by man, power can be transformed precisely to the movement in the direction of the axletree with simpler constitution, trouble scarcely occurs.

In the electric bicycle, there can be obtained excellent effects that the amount of the movement transformed in the direction of the axletree can be detected precisely and delicately and so on.

In the electric bicycle according to the invention, since the torque detection part is disposed within the disk casing, preferably detects torque of the man power driving part through the elastic body disposed between the pedals and the wheel by expansion and contraction thereof to support by the electric driving part, the constitution thereof is made compact, the torque can be detected in consideration of the all weights of the parts moved by man power. Moreover, since magnitude of the torque is detected by the elastic body, large displacement can be detected, the torque generated by man power varying subtly can be detected precisely, thereby the drive by the motor can be changed subtly to support the driving force exactly.

Since displacement of expansion and contraction of the elastic body is detected by variation of value of the potentiometer, simple constitution and easy control can be performed.

Further, since the potentiometer is adapted to operate with interlocking the small gear thereof with the gear part formed at the rotary board, the torque can be detected precisely.

Still further, since the operation body is disposed in the middle of expansion and contraction of the elastic body and the variable resistor to interlock with the movement of the operation body, the expansion and the contraction of the elastic body can be detected directly to support by the motor with few errors and good responses.

Though several embodiments of the present invention are described above, it is to be understood that the present invention is not limited only to the above-mentioned and various changes and modifications may be made in the invention without departing from the scope thereof as claimed.

## Claims

1. An electric bicycle comprising:
a man power driving part (10) rotating a wheel (3) by rotation of pedals (11);
an electric driving part (9) rotating the wheel (3) by drive of a motor (8);
a disk-shaped casing (5) which forms a hub of the wheel (3) with a rotary side casing (6) rotatably attached to an axletree (44) of the wheel (3) and a fixed side casing (7);
the disk-shaped casing (5) including therein the motor (8) which is provided to the fixed side casing (7) and transmits power to the rotary side casing (6) via a pulley (29);
the pulley (29) being fixed to a rotary axle (39) disposed concentrically about the axletree (44) and to the rotary side casing (6) for transmitting power to the rotary axle (39);
the rotary axle receiving the pedal force;
characterised by
a torque detection part (41) detecting torque of the man power driving part (10);
a control part (26) controlling drive of the motor (8) depending on magnitude of torque of the torque detection part (41);
the torque detection part (41) being provided at the rotary axle (39), the torque detection part (41) including a signal transmission means for transmitting a signal representative of the torque detected at the rotary axle (39) to the motor (8).

2. The electric bicycle of Claim 1, wherein the signal transmission means is a rotary transformer (43).

3. An electric bicycle comprising:
a man power driving part (10) rotating a wheel (3) by rotation of pedals (11);
an electric driving part (9) rotating the wheel (3) by drive of a motor (8);
a disk-shaped casing (5) which forms a hub of the wheel (3) with a rotary side casing (6) rotatably attached to an axletree (44) of the wheel (3) and a fixed side casing (7);
the disk-shaped casing (5) including therein the motor (8) which is provided to the fixed side casing (7) and transmits power to the rotary side casing (6) via a pulley (29);
the pulley (29) being fixed to a rotary axle (39) disposed concentrically about the axletree (44) and to the rotary side casing (6) for transmitting power to the rotary axle (39);
the rotary axle (39) receiving the pedal force;
characterised by
a torque detection part (41) detecting torque of the man power driving part (10);
a control part (26) controlling drive of the motor (8) depending on magnitude of torque of the torque detection part (41);
the torque detection part (41) being provided at the rotary axle (39), the torque detection part (41) being designed to detect strain of the rotary axle (39) which rotates together with the rotary side casing (6), the strain being detected by a sensor provided at the axletree (44).

4. An electric bicycle comprising:
a man power driving part (10) rotating a wheel (3) by rotation of pedals (11);
an electric driving part (9) rotating the wheel (3) by drive of a motor (108);
a disk-shaped casing (105) which forms a hub of the wheel (3) with a rotary side casing (106) rotatably attached to an axletree (139) of the wheel (3) and a fixed side casing (107);
the disk-shaped casing (105) including therein the motor (108) which is provided to the fixed side casing (107) and transmits power to the rotary side casing (106) via a pulley (129)
the pulley being rotationally connected to a rotary component (142) disposed concentrically about the axle tree (139), said pulley (29) further being fixed to the rotary side casing for transmitting power to the rotary axle;
said rotary component (142) receiving the pedal force;
characterised by
a torque detection part (151) detecting torque of the man power driving part (10);
a control part (126) controlling drive of the motor (108) depending on magnitude of torque of the torque detection part (151);
the torque detection part (151) being provided to the rotary side casing (106), and in that the disk-shaped casing further includes an elastic body (140) between the rotary component and the pulley expanding and contracting by pedaling force of the pedals (11) and transmitting the pedaling force to the rotary side casing (106), and a conversion member (157) converting expansion and contraction of the elastic body (140) in the direction of the axletree (139) of the wheel (3), the torque detection part (151) being designed to detect amount of movement of the conversion member (157).

5. The electric bicycle of Claim 4, wherein the conversion member (157) comprises:
the rotary component (142) rotating by expansion and contraction of the elastic body (140);
an inclined part (144) with an inclined end which is disposed convexly to the rotary component (142);
a slide member (145) slidably disposed in the direction of the axletree (139);
a projection part (146) formed on the slide member (145) to touch to the inclined part (144); and
an elastic body (147) urging the slide member (145) in the direction of the rotary component (142).

6. The electric bicycle of Claim 4, wherein the conversion member (157) comprises:
a screw gear (159) formed around the axletree (139) of the wheel (3);
a rotary board (153) rotating by expansion and contraction of the elastic body (140) and is slidable in the direction of the axletree (139); and
a screw part (154) formed in the rotary board (153) and screwed with the screw gear (159).

7. The electric bicycle of Claim 4, wherein the torque detection part (151) comprises a magnetic member or a conductive member and a coil (156) disposed near the magnetic member or the conductive member, and one of them is designed to move in the direction of the axletree (139) by the conversion member (157).

8. The electric bicycle of Claim 4, wherein the torque detection part (151) comprises a pair of electrodes (171) disposed in opposing relation with each other at a predetermined distance and a dielectric (170) disposed to be allowed to insert into a gap between the electrodes (171), and one of them is designed to move in the direction of the axletree (139) by the conversion member (157).

9. The electric bicycle of Claim 4, wherein the torque detection part (151) comprises a magnetic body (174) and a magnetic detector (175) disposed opposed to the magnetic body (174), and one of them is designed to move in the direction of the axletree (139) by the conversion member (157).

10. The electric bicycle of Claim 4, wherein the torque detection part (151) comprises a reflection board (177) reflecting light; and an optical part (180) including a luminous part (178) emitting light and a light reception part (179) detecting a light reception position by receiving reflection light from the reflection board (177), and the reflection board (177) or the optical part (180) is designed to move in the direction of the axletree (139) by the conversion member (157).

11. An electric bicycle comprising:
a man power driving part (10) rotating a wheel (3) by rotation of pedals (11);
an electric driving part (9) rotating the wheel (3) by drive of a motor (208);
a disk-shaped casing (205) which forms a hub of the wheel (3) with a rotary side casing (206) rotatably attached to an axletree (239) of the wheel (3) and a fixed side casing (207);
the disk-shaped casing (205) including therein the motor (208) which is provided to the fixed side casing (207) and transmits power to the rotary side casing (206) via a pulley (29),
the pulley being rotationally connected to a rotary component (242) disposed concentrically about the axletree, said pulley being rotationally fixed to the rotary side casing for transmitting power to the rotary axle; said rotary component receiving the pedal force;
characterised in that
a torque detection part (249) detecting torque of the man power driving part (10);
a control part (226) controlling drive of the motor (208) depending on magnitude of torque of the torque detection part (249);
the torque detection part (249) being provided to the rotary side casing (206), and in that the disk-shaped casing further includes an elastic body (240) between the rotary component and the pulley expanding and contracting by pedaling force of the pedals (11) and transmitting the pedaling force to the disk-shaped casing (205), the torque detection part (249) being designed to detect amount of expansion and contraction of the elastic body (240).

12. The electric bicycle of Claim 11, wherein a push member (243) rotating by pedaling force of the man power driving part (10) is provided between the elastic body (240) and the man power driving part (10), and a potentiometer (245) changing values depending on displacement of the push member (243) is provided.

13. The electric bicycle of Claim 12, wherein the potentiometer (243) includes the rotary component (242) forming a gear part (244) in a portion thereof continuously to the push member (243) and rotating around a center of the axletree (239) of the wheel (3); and a small gear (246) acting with interlocking with an action of the gear part (244) of the rotary component (242).

14. The electric bicycle of Claim 11, wherein the torque detection part (249) includes an operation body (253) disposed in the middle of expansion and contraction of the elastic body (240), and is also provided with a variable resistor (254) interlocking with an action of the operation body (253).

## Patentansprüche

1. Elektrofahrrad umfassend:
ein durch Muskelkraft angetriebenes Antriebsteil (10) zum Drehen eines Rads (3) durch Drehen von Pedalen (11);
ein elektrisch angetriebenes Antriebsteil (9) zum Drehen des Rads (3) mittels des Antriebs eines Motors (8);
ein scheibenförmiges Gehäuse (5), das eine Nabe des Rads (3) bildet, mit einem seitlichen, rotierenden Gehäuse (6), das drehbar auf einer Radachse (44) des Rads (3) befestigt ist, und einem seitlichen, fixierten Gehäuse (7);
wobei das scheibenförmige Gehäuse (5) einen Motor (8) enthält, der auf dem seitlichen, fixierten Gehäuse (7) angebracht ist und über eine Scheibe (29) dem seitlichen, rotierenden Gehäuse (6) Motorkraft zuführt;
wobei die Scheibe (29) auf einer Drehachse (39) befestigt ist, die konzentrisch gegenüber der Radachse (44) und dem seitlichen, rotierenden Gehäuse (6) angeordnet ist, um Motorkraft auf die Drehachse (39) zu übertragen;
wobei die durch Drehen der Pedale ausgeübte Kraft der Drehachse zugeführt wird,
gekennzeichnet durch
ein Drehmoment ermittelndes Teil (41) zum Ermitteln des Drehmoments des durch Muskelkraft angetriebenen Antriebsteils (10) und
ein Steuerungsteil (26) zum Steuern des Antriebs des Motors (8)in Abhängigkeit von der Größe des Drehmoments des Drehmoment ermittelnden Teils (41);
wobei das Drehmoment ermittelnde Teil (41) auf der Drehachse (39) angeordnet ist und ein Signalübertragungsmittel zum Übertragen eines Signals an den Motor (8) umfaßt, das für das auf der Drehachse (39) ermittelte Drehmoment repräsentativ ist.

2. Elektrofahrrad nach Anspruch 1, wobei das Signalübertragungsmittel ein rotierender Transformator (43) ist.

3. Elektrofahrrad umfassend:
ein durch Muskelkraft angetriebenes Antriebsteil (10) zum Drehen eines Rads (3) durch Drehen von Pedalen (11);
ein elektrisch angetriebenes Antriebsteil (9) zum Drehen des Rads (3) mittels des Antriebs eines Motors (8);
ein scheibenförmiges Gehäuse (5), das eine Nabe des Rads (3) bildet, mit einem seitlichen, rotierenden Gehäuse (6), das drehbar auf einer Radachse (44) des Rads (3) befestigt ist, und einem seitlichen, fixierten Gehäuse (7);
wobei das scheibenförmige Gehäuse (5) einen Motor (8) enthält, der auf dem seitlichen, fixierten Gehäuse (7) angebracht ist und über eine Scheibe (29) dem seitlichen, rotierenden Gehäuse (6) Motorkraft zuführt;
wobei die Scheibe (29) auf einer Drehachse (39) befestigt ist, die konzentrisch gegenüber der Radachse (44) und dem seitlichen, rotierenden Gehäuse (6) angeordnet ist, um Motorkraft auf die Drehachse (39) zu übertragen;
wobei die durch Drehen der Pedale ausgeübte Kraft der Drehachse (39) zugeführt wird,
gekennzeichnet durch
ein Drehmoment ermittelndes Teil (41) zum Ermitteln des Drehmoments des durch Muskelkraft angetriebenen Antriebsteils (10) und
ein Steuerungsteil (26) zum Steuern des Antriebs des Motors (8) in Abhängigkeit von der Größe des Drehmoments des Drehmoment ermittelnden Teils (41);
wobei das Drehmoment ermittelnde Teil (41) auf der Drehachse (39) angeordnet ist und zum Ermitteln von Spannung in der sich zusammen mit dem seitlichen, rotierenden Gehäuse (6) drehenden Drehachse (39) ausgebildet ist, und die Spannung durch einen auf der Radachse (44) angeordneten Sensor ermittelt wird.

4. Elektrofahrrad umfassend:
ein durch Muskelkraft angetriebenes Antriebsteil (10) zum Drehen eines Rads (3) durch Drehen von Pedalen (11);
ein elektrisch angetriebenes Antriebsteil (9) zum Drehen des Rads (3) mittels des Antriebs eines Motors (108);
ein scheibenförmiges Gehäuse (105), das eine Nabe des Rads (3) bildet, mit einem seitlichen, rotierenden Gehäuse (106), das drehbar auf einer Radachse (139) des Rads (3) befestigt ist, und einem seitlichen, fixierten Gehäuse (107);
wobei das scheibenförmige Gehäuse (105) einen Motor (108) enthält, der auf dem seitlichen, fixierten Gehäuse (107) angebracht ist und über eine Scheibe (129) dem seitlichen, rotierenden Gehäuse (106) Motorkraft zuführt;
wobei die Scheibe drehbar mit einem konzentrisch zur Radachse (139) angeordneten, rotierenden Bauteil (142) verbunden ist und die Scheibe (129) ferner mit dem seitlichen, rotierenden Gehäuse verbunden ist, um Motorkraft auf die Drehachse zu übertragen;
wobei die durch Drehen der Pedale ausgeübte Kraft dem rotierenden Bauteil (142) zugeführt wird,
gekennzeichnet durch
ein Drehmoment ermittelndes Teil (151) zum Ermitteln des Drehmoments des durch Muskelkraft angetriebenen Antriebsteils (10) und
ein Steuerungsteil (126) zum Steuern des Antriebs des Motors (108) in Abhängigkeit von der Größe des Drehmoments des Drehmoment ermittelnden Teils (151);
wobei das Drehmoment ermittelnde Teil (151) auf dem seitlichen, rotierenden Gehäuse (106) angeordnet ist, und
wobei das scheibenförmige Gehäuse ferner einen elastischen Körper (140) zwischen dem rotierenden Bauteil und der Scheibe umfaßt, der sich infolge der durch Drehen der Pedale (11) ausgeübten Kraft erweitert und zusammenzieht und die Pedalkraft an das seitliche, rotierende Gehäuse (106) überträgt, und ein Umwandlungsteil (157) umfaßt, das das Erweitern und Zusammenziehen des elastischen Körpers (140) in Richtung der Radachse (139) des Rads (3) umwandelt, wobei das Drehmoment ermittelnde Teil (151) so ausgebildet ist, daß es das Ausmaß der Bewegung des Umwandlungsteils (157) ermitteln kann.

5. Elektrofahrrad nach Anspruch 4, wobei das Umwandlungsteil (157)
das rotierende Bauteil (142), das durch Erweitern und Zusammenziehen des elastischen Körpers (140) rotiert;
ein angeschrägtes Teil (144) mit einem angeschrägten Ende, das konvex zum rotierenden Bauteil (142) angeordnet ist;
ein Gleitteil (145), das gleitfähig in Richtung der Radachse (139) angeordnet ist;
ein vorstehendes Teil (146), das auf dem Gleitteil (145) direkt neben dem angeschrägten Teil (144) angeordnet ist; und
einen elastischen Körper (147), der das Gleitteil (145) in Richtung des rotierenden Bauteils (142) drückt,
umfaßt.

6. Elektrofahrrad nach Anspruch 4, wobei das Umwandlungsteil (157)
ein Schneckengetriebe (159), das um die Radachse (139) des Rads (3) angeordnet ist;
einen rotierenden Träger (153), der durch das Erweitern und Zusammenziehen des elastischen Körpers (140) rotiert und in Richtung der Radachse (139) gleiten kann; und
ein in dem rotierenden Träger (153) angeordnetes Schraubteil (154), das mit dem Schneckengetriebe (159) verschraubt ist,
umfaßt.

7. Elektrofahrrad nach Anspruch 4, wobei das Drehmoment ermittelnde Teil (151) ein magnetisches Teil oder ein leitfähiges Teil umfaßt sowie eine Spule (156), die in der Nähe des magnetischen Teils oder des leitfähigen Teils angeordnet ist, und wobei eines dieser Teile so gestaltet ist, daß es sich mittels des Umwandlungsteils (157) in Richtung der Radachse (139) bewegen kann.

8. Elektrofahrrad nach Anspruch 4, wobei das Drehmoment ermittelnde Teil (151) ein Elektrodenpaar (171), das in einer vorher festgelegten Entfernung in gegengesetzter Richtung zueinander angeordnet ist, und ein Dielektrikum (170), das passend in einer Lücke zwischen den Elektroden (171) angeordnet ist, umfaßt, wobei eines dieser Teile so gestaltet ist, daß es sich mittels des Umwandlungsteils (157) in Richtung der Radachse (139) bewegen kann.

9. Elektrofahrrad nach Anspruch 4, wobei das Drehmoment ermittelnde Teil (151) einen magnetischen Körper (174) und einen in entgegengesetzter Richtung zu dem magnetischen Körper (174) angeordneten magnetischen Detektor (175) umfaßt, wobei eines dieser Teile so gestaltet ist, daß es sich mittels des Umwandlungsteils (157) in Richtung der Radachse (139) bewegen kann.

10. Elektrofahrrad nach Anspruch 4, wobei das Drehmoment ermittelnde Teil (151) einen Licht reflektierenden Reflexionsträger (177) und ein optisches Teil (180) umfaßt, das ein Licht emittierendes, leuchtendes Teil (178) und ein Licht empfangendes Teil (179) umfaßt, wobei eine Licht empfangende Position durch das Empfangen von Reflexionslicht vom Reflexionsträger (177) ermittelt wird und der Reflexionsträger (177) oder das optische Teil (180) so gestaltet ist, daß er bzw. es sich mittels des Umwandlungsteils (157) in Richtung der Radachse (139) bewegen kann.

11. Elektrofahrrad umfassend:
ein durch Muskelkraft angetriebenes Antriebsteil (10) zum Drehen eines Rads (3) durch Drehen von Pedalen (11);
ein elektrisch angetriebenes Antriebsteil (9) zum Drehen des Rads (3) mittels des Antriebs eines Motors (208);
ein scheibenförmiges Gehäuse (205), das eine Nabe des Rads (3) bildet, mit einem seitlichen, rotierenden Gehäuse (206), das drehbar auf einer Radachse (239) des Rads (3) befestigt ist, und einem seitlich fixierten Gehäuse (207);
wobei das scheibenförmige Gehäuse (205) den Motor (208) enthält, der auf dem seitlichen, fixierten Gehäuse (207) angebracht ist und über eine Scheibe (29) dem seitlichen, rotierenden Gehäuse (206) Motorkraft zuführt;
wobei die Scheibe drehbar mit einem konzentrisch zur Radachse angeordneten rotierenden Bauteil (242) verbunden ist und die Scheibe drehbar auf dem seitlichen, rotierenden Gehäuse angeordnet ist, um Motorkraft auf die Drehachse zu übertragen;
wobei die durch Drehen der Pedale ausgeübte Kraft dem rotierenden Bauteil zugeführt wird;
gekennzeichnet durch
ein Drehmoment ermittelndes Teil (249) zum Ermitteln des Drehmoments des durch Muskelkraft angetriebenen Antriebsteils (10); und
ein Steuerungsteil (226) zum Steuern des Antriebs des Motors (208) in Abhängigkeit von der Größe des Drehmoment ermittelnden Teils (249);
wobei das Drehmoment ermittelnde Teil (249) auf dem seitlichen, rotierenden Gehäuse (206) angeordnet ist; und
wobei das scheibenförmige Gehäuse ferner einen elastischen Körper (240) zwischen dem rotierenden Bauteil und der Scheibe umfaßt, der sich infolge der durch Drehen der Pedale (11) ausgeübten Kraft erweitert und zusammenzieht und die Pedalkraft an das scheibenförmige Gehäuse (205) überträgt, wobei das Drehmoment ermittelnde Teil (249) so ausgebildet ist, daß es das Ausmaß des Erweiterns und Zusammenziehens des elastischen Körpers (240) ermitteln kann.

12. Elektrofahrrad nach Anspruch 11 umfassend ein Schubteil (243), das durch das durch Muskelkraft angetriebene Antriebsteil (10) drehbar ist und zwischen dem elastischen Körper (240) und dem durch Muskelkraft angetriebenen Antriebsteil (10) angeordnet ist, und ein Potentiometer (245), dessen Wert sich nach der Verschiebung des Schubteils (243) richtet.

13. Elektrofahrrad nach Anspruch 12, wobei das Potentiometer (243) das rotierende Bauteil (242) aufweist, das in einem Abschnitt davon ein stetig zu dem Schubteil (243) ausgebildetes Getriebeteil (244) bildet und das um den Mittelpunkt der Radachse (239) des Rads (3) drehbar ist, und ein kleines Getriebe (246) umfaßt, das mit der Aktion des Getriebeteils (244) des rotierenden Bauteils (242) ineinandergreifend zusammenwirkt.

14. Elektrofahrrad nach Anspruch 11, wobei das Drehmoment ermittelnde Teil (249) ein Funktionsteil (253) umfaßt, das in der Mitte der Bewegung des sich erweiternden und zusammenziehenden elastischen Körpers (240) angeordnet ist und mit einem variablen, mit der Aktion des Funktionsteils (253) ineinandergreifend zusammenwirkenden Widerstand (254) ausgestattet ist.

## Revendications

1. Bicyclette électrique comportant :
- une partie d'entraînement par énergie humaine (10) entraînant en rotation une roue (3) par la rotation d'un pédalier (11) ;
- une partie d'entraînement électrique (9) entraînant en rotation la roue (3) par l'entraînement d'un moteur (8) ;
- une enveloppe en disque (5), formant le moyeu de la roue (3), avec un côté rotatif d'enveloppe (6), monté de façon rotative sur l'axe (44) de la roue (3) et un côté fixe d'enveloppe (7) ; l'enveloppe en disque (5) comportant, à l'intérieur, le moteur (8), qui est monté sur le côté fixe de l'enveloppe (7) et qui transmet l'énergie motrice au côté rotatif de l'enveloppe (6) par l'intermédiaire d'une poulie (29) ; ladite poulie (29) étant fixée à un axe rotatif (39) disposé de façon concentrique à l'axe (44) et au côté rotatif de l'enveloppe (6) pour transmettre l'énergie motrice à l'axe rotatif (39) ; l'axe rotatif (39) recevant les forces motrices du pédalier ;
**caractérisée en ce que :**
- une partie de détection de couple (41) détecte le couple de la partie d'entraînement par énergie humaine (10) ;
- une partie de commande (26) commande l'entraînement du moteur (8) en fonction de la valeur du couple détecté par la partie de détection de couple (41) ;
- ladite partie de détection de couple (41) est montée sur l'axe rotatif (39) et cette partie de détection de couple (41) comporte des moyens de transmission de signal pour transmettre au moteur (8) un signal représentatif de la valeur du couple détecté sur l'axe rotatif (39).

2. Bicyclette électrique selon la revendication 1, **caractérisée en ce que** les moyens de transmission de signal sont un transformateur rotatif (43).

3. Bicyclette électrique comportant :
- une partie d'entraînement par énergie humaine (10) entraînant en rotation une roue (3) par la rotation d'un pédalier (11) ;
- une partie d'entraînement électrique (9) entraînant en rotation la roue (3) par l'entraînement d'un moteur (8) ;
- une enveloppe en disque (5), formant le moyeu de la roue (3), avec un côté rotatif d'enveloppe (6), monté de façon rotative sur l'axe (44) de la roue (3) et un côté fixe d'enveloppe (7) ; l'enveloppe en disque (5) comportant, à l'intérieur, le moteur (8), qui est monté sur le côté fixe de l'enveloppe (7) et qui transmet l'énergie motrice au côté rotatif de l'enveloppe (6) par l'intermédiaire d'une poulie (29) ; ladite poulie (29) étant fixée à un axe rotatif (39) disposé de façon concentrique à l'axe (44) et au côté rotatif de l'enveloppe (6), pour transmettre l'énergie motrice à l'axe rotatif (39) ; l'axe rotatif (39) recevant les forces motrices du pédalier ;
**caractérisée en ce que :**
- une partie de détection de couple (41) détecte le couple de la partie d'entraînement par énergie humaine (10) ;
- une partie de commande (26) commande l'entraînement du moteur (8) en fonction de la valeur du couple détecté par la partie de détection de couple (41) ;
- ladite partie de détection de couple (41) est montée sur l'axe rotatif (39), cette partie de détection de couple (41) est conçue pour détecter les contraintes de l'axe rotatif (39) qui est entraîné en rotation avec le côté rotatif de l'enveloppe (6) et ces contraintes sont détectées par un capteur monté sur l'axe (44).

4. Bicyclette électrique comportant :
- une partie d'entraînement par énergie humaine (10) entraînant en rotation une roue (3) par la rotation d'un pédalier (11) ;
- une partie d'entraînement électrique (9) entraînant en rotation la roue (3) par l'entraînement d'un moteur (108) ;
- une enveloppe en disque (105), formant le moyeu de la roue (3), avec un côté rotatif d'enveloppe (106), monté de façon rotative sur l'axe (139) de la roue (3) et un côté fixe d'enveloppe (107) ; l'enveloppe en disque (105) comportant, à l'intérieur, le moteur (108), qui est monté sur le côté fixe de l'enveloppe (107) et qui transmet l'énergie motrice au côté rotatif de l'enveloppe (106) par l'intermédiaire d'une poulie (129) ; ladite poulie (129) étant connectée, de façon à pouvoir tourner, à un élément rotatif (142) disposé de façon concentrique à l'axe (139) et ladite poulie (129) étant en outre fixée au côté rotatif de l'enveloppe pour transmettre l'énergie motrice à l'élément rotatif ; ledit élément rotatif (142) recevant les forces motrices du pédalier ;
**caractérisée en ce que :**
- une partie de détection de couple (151) détecte le couple de la partie d'entraînement par énergie humaine (10) ;
- une partie de commande (126) commande l'entraînement du moteur (108) en fonction de la valeur du couple détecté par la partie de détection de couple (151) ;
- ladite partie de détection de couple (151) est montée sur le côté rotatif de l'enveloppe (106) et en ce que l'enveloppe en disque comporte en outre un corps élastique (140), entre l'élément rotatif et la poulie, étiré et comprimé par la force de pédalage du pédalier (11) et transmettant la force de pédalage au côté rotatif de l'enveloppe (106) et un organe de conversion (157) convertissant l'étirement et la compression du corps élastique (140) en un déplacement dans la direction de l'axe (139) de la roue (3), la partie de détection de couple (151) étant conçue pour détecter la valeur du déplacement de l'organe de conversion (157).

5. Bicyclette électrique selon la revendication 4, **caractérisée en ce que** l'organe de conversion (157) comporte :
- l'élément rotatif (142) entraîné en rotation par l'étirement et la compression du corps élastique (140) ;
- une partie inclinée (144) avec une extrémité inclinée disposée de façon convexe par rapport à l'élément rotatif (142) ;
- un organe glisseur (145) disposé de façon à pouvoir glisser dans la direction de l'axe (139) ;
- une partie formant saillie (146) formée sur l'organe glisseur (145) afin de venir au contact de la partie inclinée (144) ; et
- un corps élastique (147) poussant l'organe glisseur (145) dans la direction de l'élément rotatif (142).

6. Bicyclette électrique selon la revendication 4, **caractérisée en ce que** l'organe de conversion (157) comporte :
- un filetage (159) formé autour de l'axe (139) de la roue (3) ;
- un plateau rotatif (153) entraîné en rotation par l'étirement et la compression du corps élastique (140) et susceptible de coulisser dans la direction de l'axe (139) ; et
- une partie filetée (154) formée dans le plateau rotatif (153) et en prise avec le filetage (159).

7. Bicyclette électrique selon la revendication 4, **caractérisée en ce que** la partie de détection de couple (151) comporte un organe magnétique ou un organe conducteur et un enroulement (156) disposé au voisinage de l'organe magnétique ou conducteur, et en ce que l'un d'eux est conçu pour être déplacé dans la direction de l'axe (139) par l'organe de conversion (157).

8. Bicyclette électrique selon la revendication 4, **caractérisée en ce que** la partie de détection de couple (151) comporte une paire d'électrodes (171) disposées en regard l'une de l'autre à une distance prédéterminée et un diélectrique (170) destiné à s'insérer dans l'intervalle entre les électrodes (171) et en ce que l'un des deux est conçu pour être déplacé dans la direction de l'axe (139) par l'organe de conversion (157).

9. Bicyclette électrique selon la revendication 4, **caractérisée en ce que** la partie de détection de couple (151) comporte un corps magnétique (174) et un détecteur magnétique (175) disposé en regard du corps magnétique (174) et en ce que l'un des deux est conçu pour être déplacé dans la direction de l'axe (139) par l'organe de conversion (157).

10. Bicyclette électrique selon la revendication 4, **caractérisée en ce que** la partie de détection de couple (151) comporte un plateau réfléchissant la lumière (177), une partie optique (180) comportant une partie lumineuse (178) émettant de la lumière et une partie de réception de lumière (179) détectant la position de réception de lumière en recevant la lumière réfléchie par le plateau réfléchissant (177), et en ce que le plateau réfléchissant (177) ou la partie optique (180) est conçu pour être déplacé dans la direction de l'axe (139) par l'organe de conversion (157).

11. Bicyclette électrique comportant :
- une partie d'entraînement par énergie humaine (10) entraînant en rotation une roue (3) par la rotation d'un pédalier (11) ;
- une partie d'entraînement électrique (9) entraînant en rotation la roue (3) par l'entraînement d'un moteur (208) ;
- une enveloppe en disque (205), formant le moyeu de la roue (3), avec un côté rotatif d'enveloppe (206), monté de façon rotative sur l'axe (239) de la roue (3) et un côté fixe d'enveloppe (207) ; l'enveloppe en disque (205) comportant, à l'intérieur, le moteur (208), qui est monté sur le côté fixe de l'enveloppe (207) et qui transmet l'énergie motrice au côté rotatif de l'enveloppe (206) par l'intermédiaire d'une poulie (29) ; ladite poulie (29) étant connectée, de façon à pouvoir tourner, à un élément rotatif (242) disposé de façon concentrique à l'axe, ladite poulie étant fixée, de façon à pouvoir tourner, au côté rotatif de l'enveloppe pour transmettre l'énergie motrice à l'axe rotatif ; ledit élément rotatif recevant les forces motrices du pédalier ;
**caractérisée en ce que :**
- une partie de détection de couple (249) détecte le couple de la partie d'entraînement par énergie humaine (10) ;
- une partie de commande (226) commande l'entraînement du moteur (208) en fonction de la valeur du couple détecté par la partie de détection de couple (249) ;
- ladite partie de détection de couple (249) est montée sur le côté rotatif de l'enveloppe (206) et en ce que l'enveloppe en disque comporte en outre un corps élastique (240), entre l'élément rotatif et la poulie, étiré et comprimé par la force de pédalage du pédalier (11) et qui transmet la force de pédalage à l'enveloppe en disque (205), la partie de détection de couple (249) étant conçue pour détecter la valeur de l'étirement et de la compression du corps élastique (240).

12. Bicyclette électrique selon la revendication 11, **caractérisée en ce que** sont prévus :
- un organe de poussée (243), entraîné en rotation par la force de pédalage de la partie d'entraînement par énergie humaine (10), est monté entre le corps élastique (240) et la partie d'entraînement par énergie humaine (10) ; et
- un potentiomètre (245) changeant de valeur en fonction du déplacement de l'organe de poussée (243).

13. Bicyclette électrique selon la revendication 12, **caractérisée en ce que** le potentiomètre (243) comporte :
- l'élément rotatif (242) formant une partie engrenage (244) dans une partie de celui-ci contiguë à l'organe de poussée (243) et tournant autour du centre de l'axe (239) de la roue (3) ; et
- un petit pignon (246) fonctionnant en prise avec la partie engrenage (244) de l'élément rotatif (242).

14. Bicyclette électrique selon la revendication 11, **caractérisée ce que** la partie de détection de couple (249) comporte un corps d'actionnement (253) disposé dans le milieu de l'étirement et de la compression du corps élastique (240), et en ce que cette partie de détection est munie d'une résistance variable (254) solidaire du corps d'actionnement (253).
